# EUROPEAN PATENT APPLICATION

(11) **EP 4 590 031 A1**
(43) Date of publication of application: **23.07.2025**
(21) Application number: 23871910.8
(22) Date of filing: 13.09.2023
(51) Int. Cl.: H04W 48/16, H04W 8/22, H04W 72/0457

(54) **TERMINAL DEVICE AND COMMUNICATION METHOD**

(30) Priority: 30.09.2022 JP 2022158427
(71) Applicant: Sony Group Corporation, Tokyo 108-0075 (JP)
(72) Inventor: HAYASHI, Kazuki, Tokyo 108-0075 (JP); HORITA, Koki, Tokyo 108-0075 (JP); GOTO, Jungo, Tokyo 108-0075 (JP)
(74) Representative: D Young & Co LLP
(86) International application number: PCT/JP2023/033301
(87) International publication number: WO 2024/070677

(57) **Abstract**

A terminal device that is allowed to perform communication using a cellular network provided by an operator includes: a first acquisition unit that acquires a requirement regarding the communication of a user who uses the terminal device; a second acquisition unit that acquires information on a plurality of cells which the terminal device is allowed to search for across a plurality of operators; and a selection unit that selects an operator to be used for the communication based on the requirement, the information on the plurality of cells, and capability information on the terminal device regarding the communication.

## Description

### Field

The present disclosure relates to a terminal device and a communication method.

### Background

Mobile networks (e.g., cellular network such as 5G) are actively used. For example, in recent years, a user may connect a camera to a terminal device having a tethering function, and distribute (e.g., perform live distribution of) a moving image captured by the camera via the terminal device.

### Citation List

### Patent Literature

Patent Literature 1: JP 2015-115944 A
Patent Literature 2: JP 2018-007001 A

### Summary

### Technical Problem

In a mobile network, a communication environment may make communication quality unstable. Thus, it is desirable that a user preliminarily checks the communication environment at the time when the user uses the mobile network in a situation in which redoing is difficult (or situation in which redoing involves high cost), for example, at the time of live distribution. Mobile networks are, however, often used in new environments without prior information.

Therefore, the present disclosure proposes a terminal device and a communication method capable of achieving stable communication even in a communication environment without prior information.

Note that the above-described problem or object is merely one of a plurality of problems or objects that can be solved or achieved by a plurality of embodiments disclosed in the present specification.

### Solution to Problem

In order to solve the above problem, a terminal device according to one embodiment of the present disclosure is allowed to perform communication using a cellular network provided by an operator, the terminal device includes: a first acquisition unit that acquires a requirement regarding the communication of a user who uses the terminal device; a second acquisition unit that acquires information on a plurality of cells which the terminal device is allowed to search for across a plurality of operators; and a selection unit that selects an operator to be used for the communication based on the requirement, the information on the plurality of cells, and capability information on the terminal device regarding the communication.

### Brief Description of Drawings

FIG. 1 illustrates an example of use of a mobile network.
FIG. 2 outlines an embodiment.
FIG. 3 illustrates a configuration example of a communication system according to the embodiment of the present disclosure.
FIG. 4 illustrates a configuration example of a server according to the embodiment of the present disclosure.
FIG. 5 illustrates a configuration example of a management device according to the embodiment of the present disclosure.
FIG. 6 illustrates a configuration example of a base station according to the embodiment of the present disclosure.
FIG. 7 illustrates a configuration example of a terminal device according to the embodiment of the present disclosure.
FIG. 8 illustrates an example of an RSP architecture configuration applied to a communication system of the embodiment.
FIG. 9 is a flowchart illustrating an example of setting processing.
FIG. 10 illustrates how a setting screen of a requirement is opened with activation of a tethering function as a trigger.
FIG. 11 illustrates an example of the setting screen of the requirement.
FIG. 12 illustrates a display example of names of preferential modes and descriptions thereof.
FIG. 13 illustrates an example of a setting screen of an operator change condition.
FIG. 14 is a flowchart illustrating an example of the operator change processing.
FIG. 15 illustrates a method of identifying a CA combination.
FIG. 16 illustrates the method of identifying a CA combination.
FIG. 17 illustrates the method of identifying a CA combination.
FIG. 18 illustrates a result of identifying a combination of component carriers expected to be currently usable for each operator.
FIG. 19 illustrates the result of identifying a combination of component carriers expected to be currently usable for each operator.
FIG. 20 illustrates an example of notification regarding an operator change.
FIG. 21 illustrates how a user makes a contract with an operator.
FIG. 22 illustrates an example of notification regarding an operator change.
FIG. 23 illustrates a display example of communication quality information.

### Description of Embodiments

An embodiment of the present disclosure will be described in detail below with reference to the drawings. Note that, in the following embodiment, the same reference signs are attached to the same parts to omit duplicate description.

Furthermore, in the present specification and the drawings, a plurality of components having substantially the same functional configuration may be distinguished by attaching different numbers after the same reference signs. For example, a plurality of configurations having substantially the same functional configuration is distinguished as terminal devices 40₁, 40₂, and 40₃, as necessary. Note, however, that, when it is unnecessary to particularly distinguish a plurality of components having substantially the same functional configuration, only the same reference signs are attached. For example, when it is unnecessary to particularly distinguish the terminal devices 40₁, 40₂, and 40₃, the terminal devices 40₁, 40₂, and 40₃ are simply referred to as terminal devices 40.

One or a plurality of embodiments (including examples and variations) to be described below can be implemented independently. In contrast, at least a part of the plurality of embodiments to be described below may be appropriately combined and implemented with at least a part of other embodiments. The plurality of embodiments can include different novel features. Therefore, the plurality of embodiments may contribute to solving different objects or problems, and may exhibit different effects.

### <<1. Outline>>

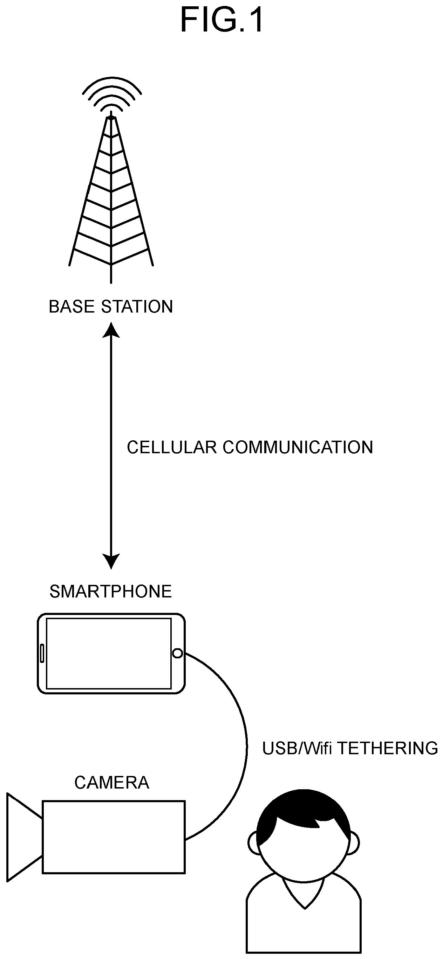

Mobile networks (e.g., cellular networks such as 3G, 4G, and 5G) are actively used. FIG. 1 illustrates an example of use of a mobile network. FIG. 1 illustrates how a user uses a terminal device having a function of connection to a cellular network and a tethering function (e.g., USB tethering function or WiFi tethering function). In an example of FIG. 1, the user connects a camera to the terminal device by using the tethering function, and distributes a moving image captured by the camera via the cellular network. Specific examples of such assumed moving image distribution include news reports, sports relay, and game live distribution.

In the mobile network, communication quality may become unstable due to a wireless environment that changes from moment to moment, a congestion situation of a base station, and the like. Thus, it is desirable that the user preliminarily checks the communication environment at the time when the user uses the mobile network in a situation in which redoing is difficult (or situation in which redoing involves high cost).

Mobile networks are, however, often used in new environments without prior information. For example, in a news reporting scene, it is assumed that a user (e.g., camera operator) often distributes a moving image from a new suddenly determined place. In this case, it is assumed that the user often encounters a situation, in which a terminal device cannot be connected to a mobile network, or a sufficient speed cannot be obtained even if the terminal device can be connected, after going to the scene on the day.

Note that it is difficult for the user to preliminarily know which operator (e.g., telecommunications carrier) is appropriate on the day, at the time, and at the place. For example, it is difficult for the user to preliminarily know the relation between the time and the place and an operator and a radio wave congestion situation at the time of occurrence of an event. Furthermore, it is difficult for the user (e.g., camera operator) to tune the settings of a communication terminal in detail. Furthermore, it is not realistic that the user makes contracts for all subscriber identity module (SIM) cards of operators which can be probably used and brings all the cards. That is, in use of the mobile network, it is difficult for the user to address a sudden situation change at a scene while an effect of easiness of advance preparation is exhibited.

Therefore, in the embodiment, when there is no advance preparation or even when there is advance preparation but a situation suddenly changes at the scene, a terminal device selects an operator at the place in accordance with a user requirement. This enables the terminal device to secure a stable communication environment.

More specifically, in the embodiment, the above-described problems are solved as follows.

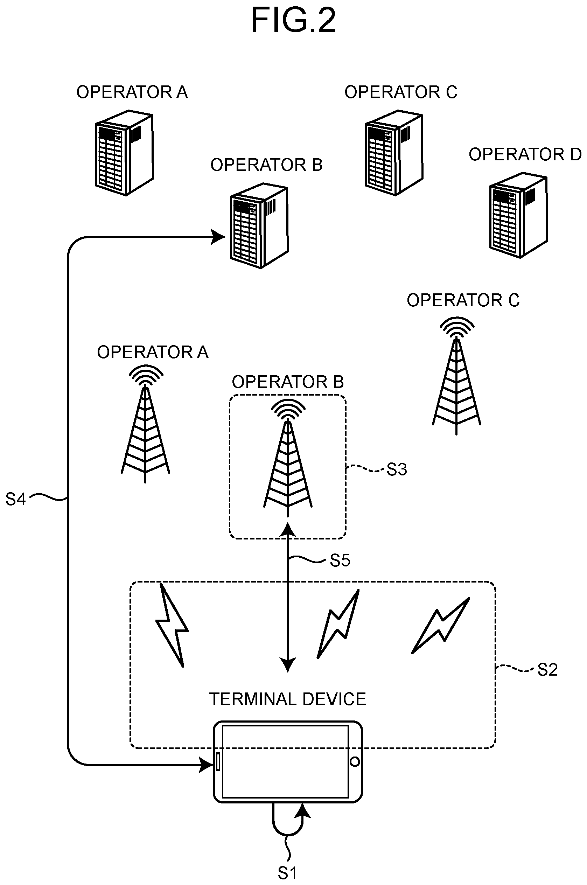

FIG. 2 outlines the embodiment.

A terminal device of the embodiment is a communication device capable of performing communication using a cellular network provided by an operator. Here, the operator is an entity of providing a cellular network such as 3G, 4G, and 5G. The operator can be rephrased as a telecommunications carrier, a communications carrier, or a service provider.

First, the terminal device prompts the user to activate the function at a specific trigger. Examples of an assumed specific trigger include (A1) explicit user operation, (A2) connection between terminal device and external equipment (e.g., camera), and (A3) activation of tethering function. The user inputs a request for a communication environment expected by the user himself/herself as a preferential operation setting in accordance with an application of the terminal device (Step S1). An assumed preferential operation setting includes (B1) download speed preference, (B2) upload speed preference, (B3) stability preference, and (B4) power saving preference.

The user starts communication by using the terminal device. During the communication, the terminal device monitors whether or not an operator change condition is satisfied. An assumed operator change condition includes (C1) explicit user operation and (C2) deterioration in quality of communication associated with any SIM (e.g., decrease in radio wave intensity or congestion of radio resources). When the operator change condition is satisfied, the terminal device acquires information on all cells receivable at the current location (Step S2).

The terminal device selects or reselects an operator based on an operator selection criterion in consideration of a cell information list and terminal capability (UE capability) (Step S3). For example, the terminal device calculates a communication speed expected by each operator based on the acquired cell information list and terminal capability. Then, the terminal device selects or reselects an operator by applying the calculated communication speed to the operator selection criterion. When an operator different from the current operator is selected, the terminal device switches between SIMs so that communication can be performed by using a cellular network of the selected operator.

Note that the terminal device may be compatible with an eSIM. In this case, the terminal device may download and activate an embedded SIM (eSIM) profile in accordance with a user operation (Step S4). For example, the terminal device requests a SIM profile from the selected operator in accordance with the user operation. In the case, the user makes a contract with the operator, as necessary. Then, the terminal device downloads the eSIM profile from a server of the operator, and activates the downloaded profile.

When the terminal device is compatible with an eSIM, the user can use a cellular network of an operator by making a contract with the operator at the place, as necessary, even if the user has not made a contract with the selected operator.

According to the embodiment, the terminal device can select an appropriate operator at the current location in accordance with an application from a combination of characteristics of receivable radio waves and terminal capability. As a result, the terminal device can implement stable communication even in a communication environment without prior information.

Although the embodiment has been outlined above, a communication system 1 according to the embodiment will be described in detail below.

### <<2. Configuration of Communication System>>

First, a configuration of the communication system 1 will be described.

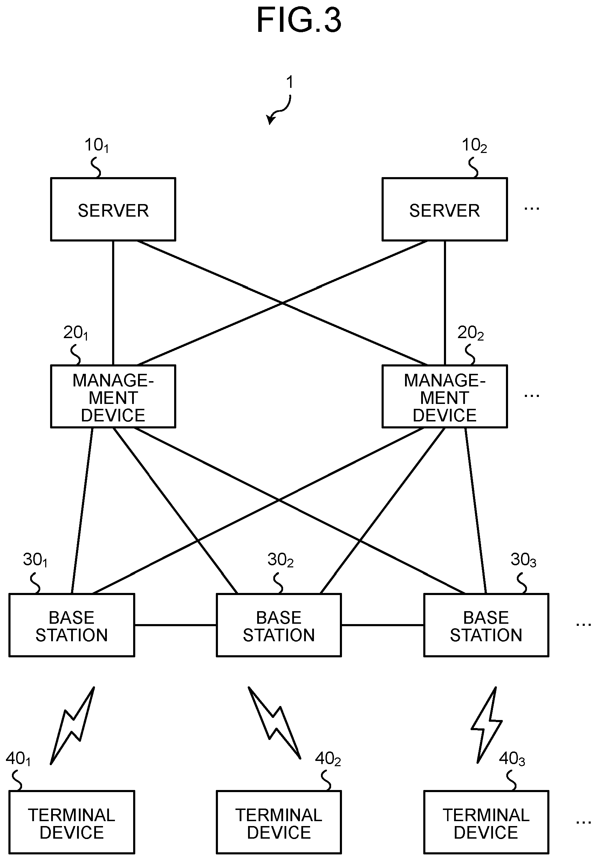

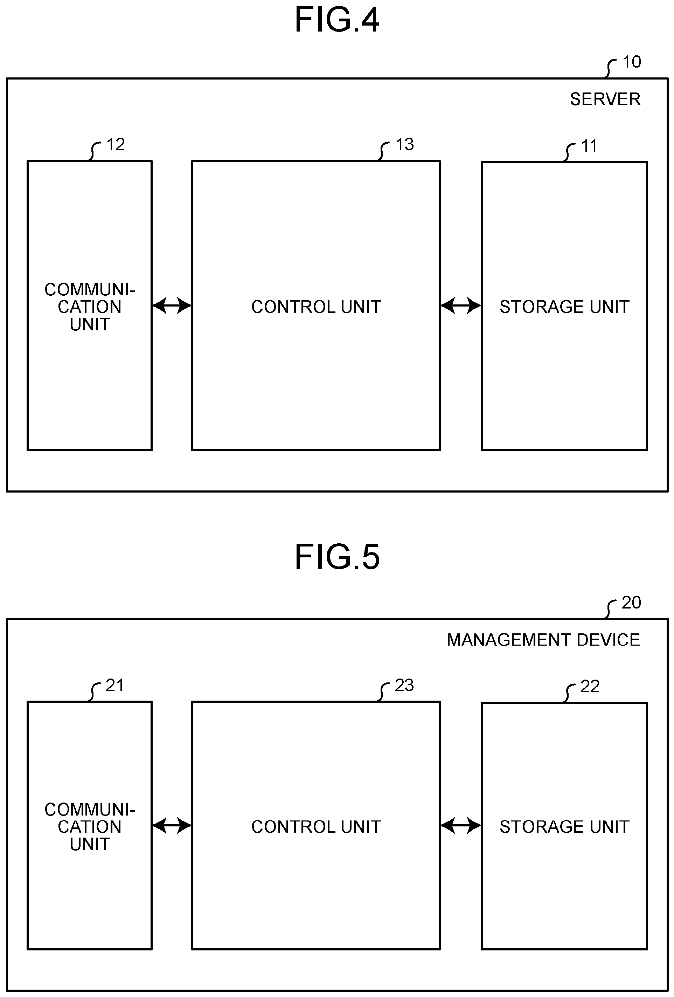

FIG. 3 illustrates a configuration example of the communication system 1 according to the embodiment of the present disclosure. The communication system 1 includes a server 10, a management device 20, a base station 30, and a terminal device 40. In the communication system 1, wireless communication devices constituting the communication system 1 operate in cooperation with each other, and thereby a wireless network that enables mobile communication is provided to the user. The wireless network of the embodiment includes, for example, a radio access network and a core network. Note that, in the embodiment, a wireless communication device has a wireless communication function. In an example of FIG. 4, the base station 30 and the terminal device 40 correspond to the wireless communication device. In the following description, the wireless communication device may be simply referred to as a communication device.

The communication system 1 may include a plurality of servers 10, a plurality of management devices 20, a plurality of base stations 30, and a plurality of terminal devices 40. In an example of FIG. 3, the communication system 1 includes servers 10₁ and 10₂ serving as servers 10, and includes management devices 20₁ and 20₂ serving as management devices 20. Furthermore, the communication system 1 includes base stations 30₁ and 30₂ serving as base stations 30, and includes terminal devices 40₁, 40₂, and 40₃ serving as terminal devices 40.

Note that the server 10 and the terminal device 40 may be connectable to a plurality of networks. Here, a network is a communication network such as a local area network (LAN), a wide area network (WAN), a cellular network, a fixed telephone network, a regional Internet protocol (IP) network, and the Internet. The network may include a wired network or a wireless network. Furthermore, the network may include a core network. Examples of the core network include an evolved packet core (EPC) and a 5G core network (5GC). Of course, a network N may be a data network connected to the core network. The data network may be a service network of a telecommunications carrier, for example, an IP multimedia subsystem (IMS) network. Furthermore, the data network may be a private network, such as an intra-company network.

The terminal device 40 may be connectable to a network through one communication path, or may be connectable to the network through a plurality of communication paths. In the case, one or at least one of the plurality of communication paths may be a wireless communication path. For example, the communication path may be a wireless communication path (radio access network) between the terminal device 40 and a base station. Furthermore, the communication path may be a wireless communication path between the terminal device 40 and an access point. Of course, the plurality of communication paths may include a wired communication path (e.g., wired LAN). Note that the communication path may be a network itself.

When the one or the plurality of communication paths includes the wireless communication path, the terminal device 40 may be connected to a network by using radio access technology (RAT) such as long term evolution (LTE), new radio (NR), Wi-Fi, and Bluetooth (registered trademark). In the case, the terminal device 40 may be able to use different types of radio access technology (wireless communication methods). For example, the terminal device 40 may be able to use NR and Wi-Fi. Furthermore, the terminal device 40 may be able to use different types of cellular communication technology (e.g., LTE and NR). LTE and NR are types of cellular communication technology, and enable mobile communication of a terminal device by arranging a plurality of areas covered by a base station in a cell shape.

Note that, in the following description, "LTE" includes LTE-Advanced (LTE-A), LTE-Advanced Pro (LTE-A Pro), and evolved universal terrestrial radio access (EUTRA). Furthermore, NR includes new radio access technology (NRAT) and further EUTRA (FEUTRA). Note that a single base station may manage a plurality of cells. In the following description, a cell compatible with LTE is referred to as an LTE cell, and a cell compatible with NR is referred to as an NR cell.

NR is radio access technology of a next generation (fifth generation) of LTE (fourth generation communication including LTE-Advanced and LTE-Advanced Pro). NR is radio access technology that can address various use cases including enhanced mobile broadband (eMBB), massive machine type communications (mMTCs), and ultra-reliable and low latency communications (URLLC). NR has been studied aiming at a technical framework that addresses use scenarios, requirements, arrangement scenarios, and the like in these use cases.

Note that the base station 30 constituting the communication system 1 may be a ground station or a non-ground station. The non-ground station may be a satellite station or an aircraft station. When the non-ground station is a satellite station, the communication system 1 may be a bent-pipe (transparent) type mobile satellite communication system.

Note that, in the embodiment, the ground station (also referred to as ground base station) refers to a base station (including relay station) installed on the ground. Here, "on the ground" has a broad sense including not only on the land but in the ground, on water, and under water. Note that, in the following description, the description of a "ground station" may be replaced with a "gateway".

Note that a base station of LTE may be referred to as an evolved node B (eNodeB) or an eNB. Furthermore, a base station of NR may be referred to as a gNodeB or a gNB. Furthermore, in LTE and NR, a terminal device (also referred to as mobile station or terminal) may be referred to as user equipment (UE). Note that the terminal device 40 is a type of communication device, and is also referred to as a mobile station or a terminal.

Note that the terminal device 40 may be connectable to a network by using radio access technology (wireless communication method) other than LTE, NR, Wi-Fi, and Bluetooth. For example, the terminal device 40 may be connectable to the network by using low power wide area (LPWA) communication. Furthermore, the terminal device 40 may be connectable to the network by using wireless communication of a unique standard.

Here, the LPWA communication is wireless communication that enables low-power wide-range communication. For example, LPWA radio is Internet of Things (IoT) wireless communication using specific low-power radio (e.g., 920 MHz band) or an industry-science-medical (ISM) band. Note that the LPWA communication used by the terminal device 40 may comply with an LPWA standard. Examples of the LPWA standard include ELTRES, ZETA, SIGFOX, LoRaWAN, and NB-Iot. Of course, the LPWA standard is not limited thereto, and other LPWA standards may be used.

Note that the one or the plurality of communication paths may include a virtual network. Examples of the plurality of communication paths to which the terminal device 40 is connectable include a virtual network such as a virtual local area network (VLAN) and a physical network such as an IP communication path. In this case, the terminal device 40 may control a path based on a path control protocol such as open shortest path first (OSPF) and a border gateway protocol (BGP).

In addition, the plurality of communication paths may include one or a plurality of overlay networks or one or a plurality of network slicings.

Note that the device in the figure may be considered as a device in a logical sense. That is, a part or all of the device in the figure may be achieved by a virtual machine (VM), a container, a docker, and the like, and implemented on physically the same hardware.

A configuration of each device constituting the communication system 1 will be specifically described below. Note that the configuration of each device to be described below is merely an example. The configuration of each device may be different from the following configuration.

### <2-1. Configuration of Server>

First, a configuration of the server 10 will be described.

The server 10 is an information processing device (computer) that provides various pieces of service to the terminal device 40 via a network (e.g., networks N1 and N2). For example, the server 10 may be a server called Subscription Manager - Data Preparation + (SM-DP+) or a server called Subscription Manager - Discovery Server (SM-DS). The SM-DP+ is a server that plays a role of transmitting a profile to the terminal device 40. SM-DS is a server that plays a role of providing one or a plurality of addresses of SM-DP+ to the terminal device 40.

Note that the server 10 is not limited to the above-described servers (SM-DP+ and SM-DS). For example, the server 10 may provide streaming service. The streaming service may be upload service for transmitting streaming data from the terminal device 40 to the server 10 or download service (distribution service) for transmitting streaming data from the server 10 to the terminal device 40.

Furthermore, the server 10 may be an application server or a web server. The server 10 may be a PC server, a midrange server, or a mainframe server. Furthermore, the server 10 may be an information processing device that performs data processing (edge processing) near the user or the terminal. For example, the server 10 may be an information processing device (computer) provided side by side with or built in a base station. Of course, the server 10 may be an information processing device that performs cloud computing.

FIG. 4 illustrates a configuration example of the server 10 according to the embodiment of the present disclosure. The server 10 includes a communication unit 11, a storage unit 12, and a control unit 13. Note that FIG. 4 illustrates a functional configuration, and a hardware configuration may be different from the configuration. Furthermore, the functions of the server 10 may be distributed and implemented in a plurality of physically separated configurations. For example, the server 10 may include a plurality of information processing devices.

The communication unit 11 is a communication interface for communicating with another device. For example, the communication unit 11 is a network interface. For example, the communication unit 11 is a local area network (LAN) interface such as a network interface card (NIC). Note that the communication unit 11 may be a wired interface or a wireless interface. The communication unit 11 functions as a communication means of the server 10. The communication unit 11 communicates with the terminal device 40 under the control of the control unit 13.

The storage unit 12 is a data readable/writable storage device such as a dynamic random access memory (DRAM), a static random access memory (SRAM), a flash memory, and a hard disk. The storage unit 12 functions as a storage means of the server 10. The storage unit 12 stores a prediction model (learning model) for predicting quality of a communication path.

The control unit 13 is a controller that controls each unit of the server 10. For example, the control unit 13 is implemented by a processor such as a central processing unit (CPU) and a micro processing unit (MPU). For example, the control unit 13 is implemented by a processor executing various programs stored in a storage device inside the server 10 by using a random access memory (RAM) or the like as a work area. Note that the control unit 13 may be implemented by an integrated circuit such as an application specific integrated circuit (ASIC) and a field programmable gate array (FPGA). All of the CPU, the MPU, the ASIC, and the FPGA can be regarded as controllers.

### <2-2. Configuration of Management Device>

Next, a configuration of the management device 20 will be described.

The management device 20 manages a wireless network. For example, the management device 20 manages communication of the base station 30. The management device 20 may have a function of, for example, a mobility management entity (MME). The management device 20 may have a function of an access and mobility management function (AMF) and/or a session management function (SMF). Of course, the function of the management device 20 is not limited to MME, AMF, and SMF. The management device 20 may have functions of a network slice selection function (NSSF), an authentication server function (AUSF), a policy control function (PCF), and unified data management (UDM). Furthermore, the management device 20 may have a function of a home subscriber server (HSS).

Note that the management device 20 may have a function of a gateway. For example, the management device 20 may have functions of a serving gateway (S-GW) and a packet data network gateway (P-GW). Furthermore, the management device 20 may have a function of a user plane function (UPF).

The core network includes a plurality of network functions. The network functions may be aggregated in one physical device, or may be distributed to a plurality of physical devices. That is, the management device 20 can be distributed and arranged in a plurality of devices. Moreover, the distribution and arrangement may be controlled so as to be dynamically executed. The base station 30 and the management device 20 constitute one network, and provide wireless communication service to the terminal device 40. The management device 20 is connected to the Internet. The terminal device 40 can use various pieces of service provided over the Internet via the base station 30.

Note that the management device 20 is not necessarily required to constitute the core network. For example, the core network is assumed to be a core network of wideband code division multiple access (W-CDMA) or code division multiple access 2000 (cdma2000). In the case, the management device 20 may function as a radio network controller (RNC).

FIG. 5 illustrates a configuration example of the management device 20 according to the embodiment of the present disclosure. The management device 20 includes a communication unit 21, a storage unit 22, and a control unit 23. Note that FIG. 5 illustrates a functional configuration, and the hardware configuration may be different from the configuration. Furthermore, the functions of the management device 20 may be statically or dynamically distributed and implemented in a plurality of physically separated configurations. For example, the management device 20 may include a plurality of server devices.

The communication unit 21 is a communication interface for communicating with another device. The communication unit 21 may be a network interface or an equipment connection interface. For example, the communication unit 21 may be a LAN) interface such as NIC) or a USB interface including a USB host controller and a USB port. Furthermore, the communication unit 21 may be a wired interface or a wireless interface. The communication unit 21 functions as a communication means of the management device 20. The communication unit 21 communicates with the base station 30 and the like under the control of the control unit 23.

The storage unit 22 is a data readable/writable storage device such as a DRAM, an SRAM, a flash memory, and a hard disk. The storage unit 22 functions as a storage means of the management device 20. The storage unit 22 stores, for example, a connection state of the terminal device 40. For example, the storage unit 22 stores a state of radio resource control (RRC) of the terminal devices 40 and states of EPS connection management (ECM) and 5G system connection management (CM). The storage unit 22 may function as a home memory that stores information on the position of the terminal device 40.

The control unit 23 is a controller that controls each unit of the management device 20. The control unit 23 is implemented by a processor such as a CPU), an MPU), and a GPU. For example, the control unit 23 is implemented by a processor executing various programs stored in a storage device inside the management device 20 by using a RAM and the like as a work area. Note that the control unit 23 may be implemented by an integrated circuit such as an ASIC and an FPGA. Any of the CPU, the MPU, the GPU, the ASIC, and the FPGA can be regarded as controllers.

### <2-3. Configuration of Base Station>

Next, a configuration of the base station 30 will be described.

The base station 30 is a wireless communication device that wirelessly communicates with the terminal device 40. The base station 30 may wirelessly communicate with the terminal devices 40 via the relay station, or may wirelessly communicate with the terminal devices 40 directly.

The base station 30 is a type of communication device. More specifically, the base station 30 is a device corresponding to a wireless base station (e.g., base station, Node B, eNB, and gNB) or a radio access point. The base station 30 may be a wireless relay station. Furthermore, the base station 30 may be an optical extension device called a remote radio head (RRH) or a radio unit (RU). Furthermore, the base station 30 may be a reception station such as a field pickup unit (FPU). Furthermore, the base station 30 may be an integrated access and backhaul (IAB) donor node or an IAB relay node, which provide a radio access line and a radio backhaul line by time division multiplexing, frequency division multiplexing, or spatial division multiplexing.

Note that the base station 30 may use cellular communication technology or wireless LAN technology as the radio access technology. Of course, the radio access technology used by the base station 30 is not limited thereto. The base station 30 may use other radio access technology. For example, the base station 30 may use low power wide area (LPWA) communication technology as the radio access technology. Of course, the base station 30 may perform wireless communication using quasi-millimeters or millimeter waves. Furthermore, the base station 30 may perform wireless communication using radio waves or wireless communication (optical radio) using infrared rays and visible light.

The base station 30 may be able to perform non-orthogonal multiple access (NOMA) communication with the terminal device 40. Here, the NOMA communication refers to communication (transmission, reception, or both thereof) using non-orthogonal resources. Note that the base station 30 may be able to perform the NOMA communication with another base station 30.

Note that base stations 30 may be able to communicate with each other via an interface between a base station and a core network (e.g., NG interface and S1 interface). Any of a wired interface and a wireless interface may be used as the interface. Furthermore, the base stations may be able to communicate with each other via an interface between the base stations (e.g., Xn interface, X2 interface, S1 interface, and F1 interface). Any of a wired interface and a wireless interface may be used as the interface.

Note that the concept of the base station includes not only a donor base station but a relay base station (also referred to as relay station). For example, the relay base station may be any one of an RF repeater, a smart repeater, and an intelligent surface. Furthermore, the concept of the base station includes not only a structure having a function of the base station but a device installed in the structure.

The structure includes a building such as a high-rise building, a house, a steel tower, station facilities, airport facilities, harbor facilities, an office building, a school building, a hospital, a factory, commercial facilities, and a stadium. Note that the concept of the structure includes not only a building but a non-building structure, such as a tunnel, a bridge, a dam, a wall, and an iron pillar, and facilities such as a crane, a gate, and a windmill. Furthermore, the concept of the structure includes not only a structure on land (on ground in narrow sense) or in the ground but a structure on water such as a pier and a megafloat, and a structure under water such as marine observation facilities. The base station can be rephrased as an information processing device.

The base station 30 may be a donor station or a relay station. Furthermore, the base station 30 may be a fixed station or a mobile station. The mobile station is a movable wireless communication device (e.g., base station). In the case, the base station 30 may be a device installed in a moving object, or may be the moving object itself. For example, a relay station having mobility can be regarded as the base station 30 serving as a mobile station. Furthermore, a device originally having the mobility and mounted with a function (at least part of function of base station) of a base station, such as a vehicle, an unmanned aerial vehicle (UAV) represented by a drone, and a smartphone, also corresponds to the base station 30 serving as the mobile station.

Here, the moving object may be a mobile terminal such as a smartphone and a mobile phone. Furthermore, the moving object may be a moving object that moves on land (on ground in narrow sense) (e.g., vehicle such as automobile, bicycle, bus, truck, motorcycle, train, and linear motor car) or a moving object that moves in the ground (e.g., in tunnel) (e.g., subway).

Furthermore, the moving object may be a moving object that moves on water (e.g., vessel such as passenger ship, cargo ship, and hovercraft) or a moving object that moves under water (e.g., submersible ship such as submersible, submarine, and unmanned submersible machine).

Note that the moving object may be a moving object that moves in the atmosphere (e.g., aircraft such as airplane, airship, and drone).

Furthermore, the base station 30 may be a ground base station (ground station) installed on the ground. For example, the base station 30 may be disposed in a structure on the ground, or may be installed in a moving object that moves on the ground. More specifically, the base station 30 may be an antenna installed in a structure such as a building and a signal processing device connected to the antenna. Of course, the base station 30 may be a structure or a moving object itself. "On the ground" has a broad sense including not only on the land (on ground in narrow sense) but in the ground, on water, and under water. Note that the base station 30 is not limited to a ground base station. For example, when the communication system 1 is a satellite communication system, the base station 30 may be an aircraft station. As seen from a satellite station, an aircraft station located on the earth is a ground station.

Note that the base station 30 is not limited to a ground station. The base station 30 may be a non-ground base station (non-ground station) capable of floating in the air or space. For example, the base station 30 may be an aircraft station or a satellite station.

The satellite station can float outside the atmosphere. The satellite station may be a device mounted in a space moving object such as an artificial satellite, or a space moving object itself. The space moving object moves outside the atmosphere. Examples of the space moving object include an artificial celestial object such as an artificial satellite, a spacecraft, a space station, and a probe.

Note that a satellite serving as a satellite station may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be a device mounted in the low earth orbiting satellite, the medium earth orbiting satellite, the geostationary earth orbiting satellite, or the highly elliptical orbiting satellite.

The aircraft station is a wireless communication device capable of floating in the atmosphere, such as an aircraft. The aircraft station may be a device mounted in an aircraft and the like or an aircraft itself. Note that the concept of the aircraft includes not only a heavy aircraft such as an airplane and a glider but a light aircraft such as a balloon and an airship. Furthermore, the concept of the aircraft includes not only the heavy aircraft and the light aircraft but a rotorcraft such as a helicopter and an autogyro. Note that the aircraft station (or aircraft mounted with aircraft station) may be an unmanned aircraft such as a drone.

Note that the concept of the unmanned aircraft also includes an unmanned aircraft system (UAS) and a tethered unmanned aircraft system (tethered UAS). Furthermore, the concept of the unmanned aircraft includes a lighter than air (LTA) UAS and a heavier than air (HTA) UAS. In addition, the concept of the unmanned aircraft also includes a high altitude UAS platform (HAP).

The coverage of the base station 30 may be as large as a macro cell, or as small as a pico cell. Of course, the coverage of the base station 30 may be as extremely small as a femto cell. Furthermore, the base station 30 may have beamforming capability. In this case, in the base station 30, a cell or a service area may be formed for each beam.

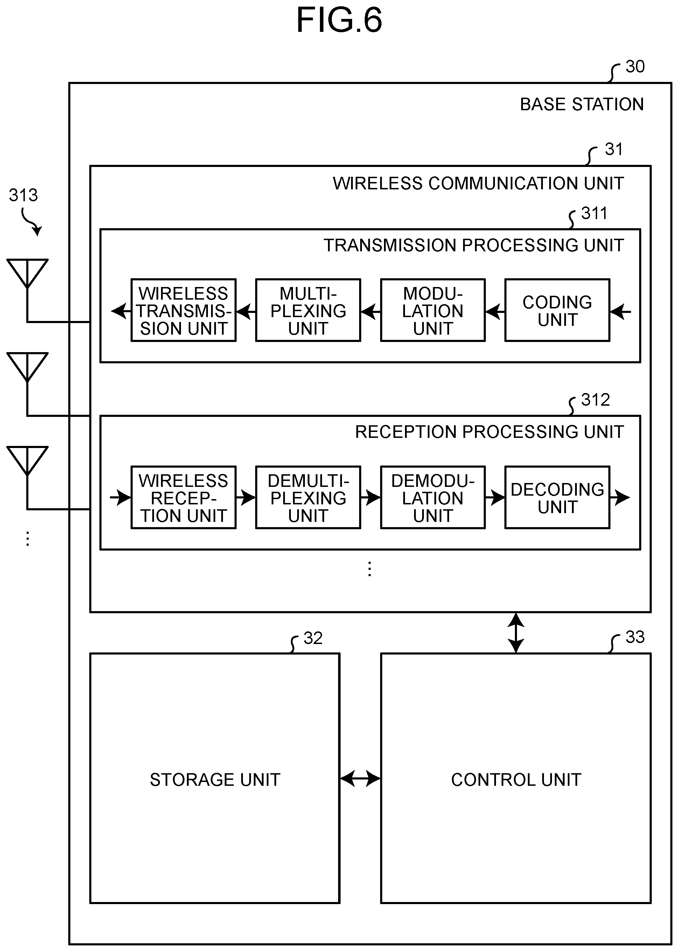

FIG. 6 illustrates a configuration example of the base station 30 according to the embodiment of the present disclosure. The base station 30 includes a wireless communication unit 31, a storage unit 32, and a control unit 33. Note that FIG. 6 illustrates a functional configuration, and the hardware configuration may be different from the configuration. Furthermore, the functions of the base station 30 may be distributed and implemented in a plurality of physically separated configurations.

The wireless communication unit 31 is a signal processing unit for wirelessly communicating with another wireless communication device (e.g., terminal device 40). The wireless communication unit 31 operates under the control of the control unit 33. The wireless communication unit 31 is compatible with one or a plurality of radio access methods. For example, the wireless communication unit 31 is compatible with both NR and LTE. The wireless communication unit 31 may be compatible with W-CDMA or cdma2000 in addition to NR or LTE. Furthermore, the wireless communication unit 31 may be compatible with automatic retransmission technology such as hybrid automatic repeat request (HARQ).

The wireless communication unit 31 includes a transmission processing unit 311, a reception processing unit 312, and an antenna 313. The wireless communication unit 31 may include a plurality of transmission processing units 311, a plurality of reception processing units 312, and a plurality of antennas 313. Note that, when the wireless communication unit 31 is compatible with a plurality of radio access methods, each unit of the wireless communication unit 31 can be individually configured for each radio access method. For example, the transmission processing unit 311 and the reception processing unit 312 may be individually configured by LTE and NR. Furthermore, the antenna 313 may include a plurality of antenna elements (e.g., plurality of patch antennas). In this case, the wireless communication unit 31 may be configured to be able to perform beamforming. The wireless communication unit 31 may be configured to be able to perform polarization beamforming using vertically polarized waves (V-polarized waves) and horizontally polarized waves (H-polarized waves).

The transmission processing unit 311 performs processing of transmitting downlink control information and downlink data. For example, the transmission processing unit 311 codes downlink control information and downlink data input from the control unit 33 by using a coding method such as block coding, convolutional coding, turbo coding, and the like. Here, in such coding, coding with a polar code and coding with a low density parity check (LDPC) code may be performed. Then, the transmission processing unit 311 modulates a coded bit by a predetermined modulation method such as BPSK, QPSK, 16 QAM, 64 QAM, and 256 QAM. In this case, signal points on a constellation is not necessarily required to be equidistant from each other. The constellation may be a non uniform constellation (NUC). Then, the transmission processing unit 311 multiplexes a modulation symbol of each channel and a downlink reference signal, and places the multiplexed modulation symbol and the downlink reference signal to a predetermined resource element. Then, the transmission processing unit 311 performs various pieces of signal processing on the multiplexed signal. For example, the transmission processing unit 311 performs processing such as conversion into a frequency domain by fast Fourier transform, addition of a guard interval (cyclic prefix), generation of a baseband digital signal, conversion into an analog signal, quadrature modulation, up-conversion, removal of an extra frequency component, and power amplification. A signal generated by the transmission processing unit 311 is transmitted from the antenna 313.

The reception processing unit 312 processes an uplink signal received via the antenna 313. For example, the reception processing unit 312 performs, on the uplink signal, down-conversion, removal of an unnecessary frequency component, control of an amplification level, quadrature demodulation, conversion to a digital signal, removal of a guard interval (cyclic prefix), extraction of a frequency domain signal by fast Fourier transform, and the like. Then, the reception processing unit 312 separates an uplink channel such as a physical uplink shared channel (PUSCH) and a physical uplink control channel (PUCCH) and an uplink reference signal from signals subjected to these pieces of processing. Furthermore, the reception processing unit 312 demodulates a reception signal by using a modulation method such as binary phase shift keying (BPSK) and quadrature phase shift keying (QPSK) for a modulation symbol of the uplink channel. The modulation method used in the demodulation may be 16 quadrature amplitude modulation (QAM), 64 QAM, or 256 QAM. In this case, signal points on a constellation is not necessarily required to be equidistant from each other. The constellation may be a non uniform constellation (NUC). Then, the reception processing unit 312 performs decoding processing on a demodulated coded bit of the uplink channel. Decoded uplink data and uplink control information are output to the control unit 33.

The antenna 313 is an antenna device (antenna unit) that mutually converts current and radio waves. The antenna 313 may include one antenna element (e.g., one patch antenna) or a plurality of antenna elements (e.g., plurality of patch antennas). When the antenna 313 includes a plurality of antenna elements, the wireless communication unit 31 may be configured to be able to perform beamforming. For example, the wireless communication unit 31 may be configured to generate a directional beam by controlling the directivity of a wireless signal using a plurality of antenna elements. Note that the antenna 313 may be a dual-polarized antenna. When the antenna 313 is a dual-polarized antenna, the wireless communication unit 31 may use vertically polarized waves (V-polarized waves) and horizontally polarized waves (H-polarized waves) in transmitting a wireless signal. Then, the wireless communication unit 31 may control the directivity of the wireless signal transmitted by using the vertically polarized waves and the horizontally polarized waves. Furthermore, the wireless communication unit 31 may transmit and receive spatially multiplexed signals via a plurality of layers including a plurality of antenna elements.

The storage unit 32 is a data readable/writable storage device such as a DRAM, an SRAM, a flash memory, and a hard disk. The storage unit 32 functions as a storage means of the base station 30.

The control unit 33 is a controller that controls each unit of the base station 30. The control unit 33 is implemented by a processor such as a CPU and an MPU. For example, the control unit 33 is implemented by a processor executing various programs stored in a storage device inside the base station 30 by using a RAM and the like as a work area. Note that the control unit 33 may be implemented by an integrated circuit such as an ASIC and an FPGA. All of the CPU, the MPU, the ASIC, and the FPGA can be regarded as controllers. Furthermore, the control unit 33 may be implemented by a GPU in addition to or instead of the CPU.

In some embodiments, the concept of the base station may include an assembly of a plurality of physical or logical devices. For example, in this embodiment, the base station may be distinguished into a plurality of devices such as a baseband unit (BBU) and a radio unit (RU). Then, the base station may be interpreted as an assembly of the plurality of devices. Furthermore, the base station may be either or both of the BBU and the RU. The BBU and the RU may be connected by a predetermined interface (e.g., enhanced common public radio interface (eCPRI)). Note that the RU may be rephrased as a remote radio unit (RRU) or a radio dot (RD). Furthermore, the RU may correspond to a gNB distributed unit (gNB-DU) to be described later. Moreover, the BBU may correspond to a gNB central unit (gNB-CU). Alternatively, the RU may be a wireless device connected to the gNB-DU to be described later. The gNB-CU, the gNB-DU, and the RU connected to the gNB-DU may comply with an open radio access network (O-RAN). Moreover, the RU may be a device integrated with an antenna. An antenna (e.g., antenna integrated with RU) of the base station may adopt an advanced antenna system, and support MIMO (e.g., full dimension (FD)-MIMO) and beamforming. Furthermore, the antenna of the base station may include, for example, 64 transmission antenna ports and 64 reception antenna ports.

Furthermore, the antenna mounted on the RU may be an antenna panel including one or more antenna elements. The RU may be mounted with one or more antenna panels. For example, the RU may be mounted with two types of antenna panels including an antenna panel of horizontally polarized waves and an antenna panel of vertically polarized waves or two types of antenna panels including an antenna panel of a right-handed circularly polarized waves and an antenna panel of left-handed circularly polarized waves. Furthermore, the RU may form and control an independent beam for each antenna panel.

Note that a plurality of base stations may be connected with each other. One or a plurality of base stations may be included in a radio access network (RAN). In this case, the base station may be simply referred to as a RAN, a RAN node, an access network (AN), or an AN node. Note that a RAN in LTE may be called an enhanced universal terrestrial RAN (EUTRAN). Furthermore, a RAN in NR may be called an NGRAN. Furthermore, a RAN in W-CDMA (UMTS) may be called a UTRAN.

Note that a base station of LTE may be referred to as an evolved node B (eNodeB) or an eNB. In the case, the EUTRAN includes one or a plurality of eNodeBs (eNBs). Furthermore, a base station of NR may be referred to as a gNodeB or a gNB. In the case, the NGRAN includes one or a plurality of gNBs. The EUTRAN may include a gNB (en-gNB) connected to a core network in an LTE communication system (EPS) (EPC). Similarly, the NGRAN may include an ng-eNB connected to a core network 5GC in a 5G communications system (5GS).

Note that, when the base station is an eNB, a gNB, or the like, the base station may be referred to as a 3GPP access. Furthermore, when the base station is a radio access point, the base station may be referred to as a non-3GPP access. Moreover, the base station may be an optical extension device called a remote radio head (RRH) or a radio unit (RU). Furthermore, when the base station is a gNB, the base station may be obtained by combining the gNB-CU and the gNB-DU described above, or may be either of the gNB-CU and the gNB-DU.

Here, for communication with UE, the gNB-CU hosts a plurality of upper layers (e.g., radio resource control (RRC), service data adaptation protocol (SDAP), and packet data convergence protocol (PDCP)) among access strata. In contrast, the gNB-DU hosts a plurality of lower layers (e.g., radio link control (RLC), medium access control (MAC), and physical layer (PHY)) among the access strata. That is, among messages/information to be described later, RRC signaling (semi-static notification) may be generated by the gNB-CU while MAC CE and DCI (dynamic notification) may be generated by the gNB-DU. Furthermore, among RRC configurations (semi-static notifications), for example, some configurations such as IE: cellGroupConfig may be generated by the gNB-DU, and the remaining configurations may be generated by the gNB-CU. These configurations may be transmitted and received through an F1 interface to be described later.

Note that the base station may be configured to be able to communicate with another base station. For example, when a plurality of base stations is obtained by combining eNBs or an eNB and an en-gNB, the base stations may be connected with each other by an X2 interface. Furthermore, when the plurality of base stations is obtained by combining gNBs or a gn-eNB and a gNB, the devices may be connected with each other by an Xn interface. Furthermore, when the plurality of base stations is obtained by combining a gNB-CU and a gNB-DU, the devices may be connected with each other by the above-described F1 interface. A message/information (e.g., RRC signaling, MAC control element (MAC CE), and DCI) to be described later may be transmitted between a plurality of base stations via, for example, the X2 interface, the Xn interface, or the F1 interface.

A cell provided by the base station may be called a serving cell. The concept of the serving cell includes a primary cell (PCell) and a secondary cell (SCell). When dual connectivity is set for UE (e.g., terminal device 40), the PCell provided by a master node (MN) and zero or one or more SCells may be called a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity.

Note that the serving cell may include a primary secondary cell or a primary SCG cell (PSCell). When the dual connectivity is set for UE, a PSCell provided by a secondary node (SN) and zero or one or more SCells may be called a secondary cell group (SCG). Unless a special setting (e.g., PUCCH on SCell) is made, a physical uplink control channel (PUCCH) is transmitted in the PCell and the PSCell, but is not transmitted in the SCell. Furthermore, a radio link failure is also detected in the PCell and the PSCell, but is not detected in the SCell (is not required to be detected). As described above, the PCell and the PSCell have a special role in the serving cell, and thus are also called special cells (SpCells).

One downlink component carrier and one uplink component carrier may be associated with one cell. Furthermore, a system bandwidth for one cell may be divided into a plurality of bandwidth parts (BWPs). In this case, one or a plurality of BWPs may be set in UE, and the UE may use one BWP as an active BWP. Furthermore, wireless resources (e.g., frequency band, numerology (subcarrier spacing), and slot format (slot configuration)) that can be used by the terminal device 40 may be different for each cell, each component carrier, or each BWP.

### <2-4. Configuration of Terminal Device>

Next, a configuration of the terminal device 40 will be described.

The terminal device 40 is a wireless communication device that wirelessly communicates with another communication device such as the base station 30. The terminal device 40 is connectable to a plurality of communication paths. For example, the terminal device 40 the terminal device may be configured to be connectable to two communication paths of Wi-Fi (registered trademark) and a cellular network. The terminal device 40 may be connectable to a plurality of cellular networks. In the case, the plurality of cellular networks may be associated with different subscriber identity modules (SIMs).

Any form of computer can be adopted for the terminal device 40. For example, the terminal device 40 may be a mobile terminal such as a mobile phone, a smart device (smartphone or tablet), a personal digital assistant (PDA), and a notebook PC. Furthermore, the terminal device 40 may be an imaging device (e.g., camcorder) having a communication function. Furthermore, the terminal device 40 may be a motorcycle, a moving relay vehicle, or the like on which communication equipment such as a field pickup unit (FPU) is mounted. Furthermore, the terminal device 40 may be a machine to machine (M2M) device or an Internet of Things (IoT) device. Furthermore, the terminal device 40 may be a wearable device such as a smart watch.

Note that the terminal device 40 may be an xR device such as an augmented reality (AR) device, a virtual reality (VR) device, and a mixed reality (MR) device. In the case, the xR device may be a glasses-type device, such as AR glasses and MR glasses, or a head-mounted device such as a VR head-mounted display. When the terminal device 40 is an xR device, the terminal device 40 may be a standalone device including only a user wearing portion (e.g., glasses portion). Furthermore, the terminal device 40 may be a terminal interlocking device including the user wearing portion (e.g., glasses portion) and a terminal portion (e.g., smart device) interlocked with the portion.

Note that the terminal device 40 may be configured to be able to switch between and use a plurality of SIM cards. For example, the terminal device 40 may be compatible with a dual SIM or a triple SIM. Of course, the terminal device 40 may be configured such that more than three SIM cards can be inserted into the terminal device 40.

Furthermore, the terminal device 40 may be compatible with remote SIM provisioning (RSP). For example, the terminal device 40 may be compatible with an embedded SIM (eSIM). An RSP-compatible terminal device can rewrite information (hereinafter, referred to as profile) on wireless communication without replacing a SIM card.

Here, the profile is information on wireless communication, and is data in which information of a service provider (communications carrier) and contractor information (e.g., ICCID to be allocated to eSIM) are recorded. An IC card identifier (ICCID) is a unique number for identifying a profile. The profile can be downloaded from a server (e.g., server 10) on a network.

Note that the profile may be an eSIM profile. The eSIM profile is a profile used in an eSIM-compatible communication device. For example, the eSIM profile is a combination of data and applications provisioned in an eUICC in order to provide service. The embedded UICC (eUICC) is a universal integrated circuit card (UICC) that enables local management of a profile in a secure method. In the following description, not only a profile recorded in a SIM card but an eSIM profile may be referred to as a SIM profile or simply as a profile.

Note that the terminal device 40 may be able to perform NOMA communication with the base station 30. Furthermore, the terminal device 40 may be able to use automatic retransmission technology such as HARQ at the time of communicating with the base station 30. Furthermore, the terminal device 40 may be able to perform sidelink communication with another terminal device 40. The terminal device 40 may be able to use the automatic retransmission technology such as HARQ also at the time of performing the sidelink communication. Note that the terminal device 40 may be able to perform the NOMA communication also in communication (sidelink) with another terminal device 40. Furthermore, the terminal device 40 may be able to perform LPWA communication with another communication device (e.g., base station 30 and another terminal device 40). Furthermore, the wireless communication used by the terminal device 40 may be performed by using millimeter waves. Note that the wireless communication (including sidelink communication) used by the terminal device 40 may be performed by using radio waves, or may be performed by infrared rays or visible light (optical radio).

Furthermore, the terminal device 40 may be a moving object device. The moving object device is a movable wireless communication device. In the case, the terminal device 40 may be a wireless communication device installed in a moving object or the moving object itself. For example, the terminal device 40 may be a vehicle that moves on a road, such as an automobile, a bus, a truck, and a motorcycle, a vehicle that moves on a rail installed in a track of a train and the like, or a wireless communication device mounted on the vehicle. Note that the moving object may be a mobile terminal, or a moving object that moves on land (on ground in narrow sense), in the ground, on water, or under water. Furthermore, the moving object may be a moving object that moves in the atmosphere, such as a drone and a helicopter, or a moving object that moves outside the atmosphere, such as an artificial satellite.

The terminal device 40 may be simultaneously connected with a plurality of base stations or a plurality of cells to perform communication. For example, when one base station supports a communication area via a plurality of cells (e.g., pCell and sCell), the plurality of cells is bundled by carrier aggregation (CA) technology, dual connectivity (DC) technology, or multi-connectivity (MC) technology to enable communication between the base stations 30 and the terminal device 40. Alternatively, the terminal device 40 can communicate with the plurality of base stations 30 by coordinated multi-point transmission and reception (CoMP) technology via cells of different base stations 30.

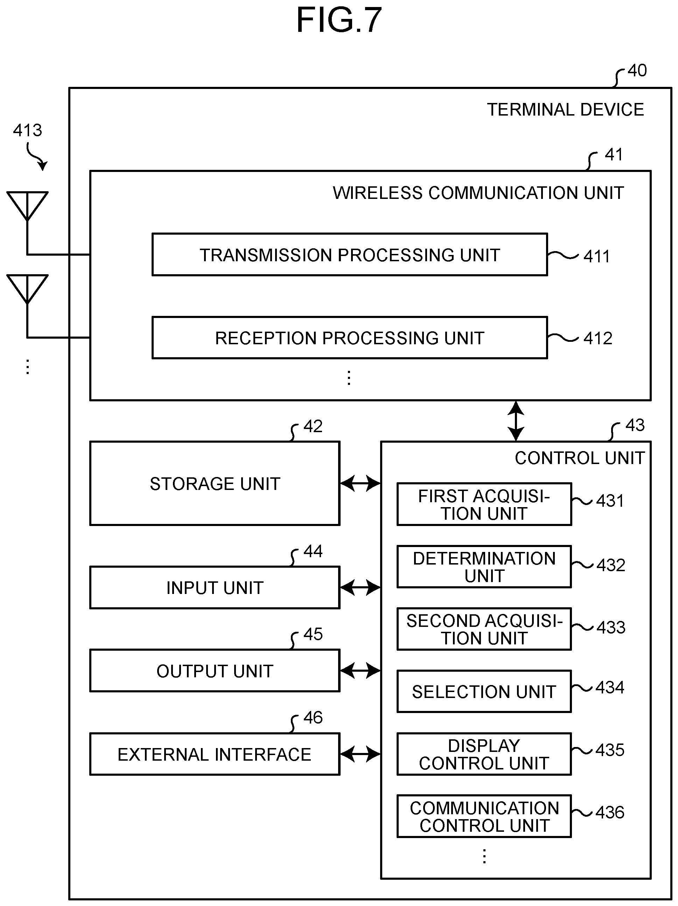

FIG. 7 illustrates a configuration example of the terminal device 40 according to the embodiment of the present disclosure. The terminal device 40 includes a wireless communication unit 41, a storage unit 42, a control unit 43, an input unit 44, an output unit 45, and an external interface 46. Note that FIG. 7 illustrates a functional configuration, and the hardware configuration may be different from the configuration. Furthermore, the functions of the terminal device 40 may be distributed and implemented in a plurality of physically separated configurations.

The wireless communication unit 41 is a signal processing unit for wirelessly communicating with another wireless communication device (e.g., base station 30 and another terminal device 40). The wireless communication unit 41 operates under the control of the control unit 43. The wireless communication unit 41 includes a transmission processing unit 411, a reception processing unit 412, and an antenna 413. The wireless communication unit 41, the transmission processing unit 411, the reception processing unit 412, and the antenna 413 may have configurations similar to those of the wireless communication unit 31, the transmission processing unit 311, the reception processing unit 312, and the antenna 313 of the base station 30. Furthermore, the wireless communication unit 41 may be configured to be able to perform beamforming similarly to the wireless communication unit 31. Moreover, the wireless communication unit 41 may be configured to be able to transmit and receive spatially multiplexed signals similarly to the wireless communication unit 31.

The storage unit 42 is a data readable/writable storage device such as a DRAM, an SRAM, a flash memory, and a hard disk. The storage unit 42 functions as a storage means of the terminal device 40. The storage unit 42 stores a user requirement (e.g., preferential operation setting) regarding communication.

The control unit 43 is a controller that controls each unit of the terminal device 40. The control unit 43 is implemented by a processor such as a CPU and an MPU. For example, the control unit 43 is implemented by a processor executing various programs stored in a storage device inside the terminal device 40 by using a RAM and the like as a work area. Note that the control unit 43 may be implemented by an integrated circuit such as an ASIC and an FPGA. All of the CPU, the MPU, the ASIC, and the FPGA can be regarded as controllers. Furthermore, the control unit 43 may be implemented by a GPU in addition to or instead of the CPU.

As illustrated in FIG. 7, the control unit 43 includes a first acquisition unit 431, a determination unit 432, a second acquisition unit 433, a selection unit 434, a display control unit 435, and a communication control unit 436. Each block (first acquisition unit 431 to communication control unit 436) constituting the control unit 43 is a functional block indicating a function of the control unit 43. These functional blocks may be software blocks or hardware blocks. For example, each of the above-described functional blocks may be one software module implemented by software (including microprogram) or one circuit block on a semiconductor chip (die). Of course, each functional block may be one processor or one integrated circuit. The control unit 43 may include a functional unit different from the above-described functional blocks. Any method of constituting such a functional block can be adopted. The operation of the control unit 43 may be the same as the operation of each block of each block of the control unit 13 of the server 10.

The input unit 44 is an input device that receives various inputs from the outside. For example, the input unit 44 is an operation device for the user to perform various operations, such as a keyboard, a mouse, and an operation key. Note that, when a touch panel is adopted as the terminal device 40, the touch panel is included in the input unit 44. In this case, the user performs various operations by touching the screen with his/her finger or a stylus.

The output unit 45 is a device that gives various outputs of, for example, sound, light, vibration, and an image to the outside. The output unit 45 gives various outputs to the user under the control of the control unit 43. Note that the output unit 45 includes a display device that displays various pieces of information. The display device is, for example, a liquid crystal display or an organic electro luminescence (EL) display. Note that the output unit 45 may be a touch panel display device. In this case, the input unit 44 and the output unit 45 may be regarded as being integrated with each other. The output unit 45 may be an output unit of an xR device such as AR glasses.

The external interface is used for connecting the terminal device 40 with another terminal device (external equipment). The external interface may be a wired interface, such as USB and a LAN, or a wireless interface, such as WiFi (registered trademark) and Bluetooth (registered trademark).

### <2-5. RSP Architecture>

The terminal device 40 may be compatible with remote SIM provisioning (RSP). For example, the terminal device 40 may be compatible with an embedded SIM (eSIM). The RSP will be described below.

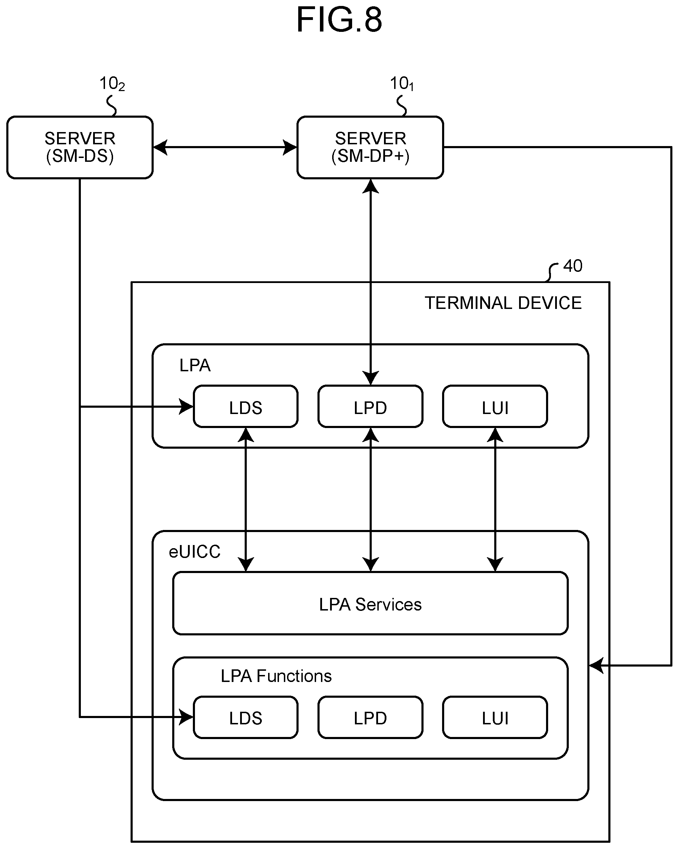

FIG. 8 illustrates an example of an RSP architecture configuration applied to the communication system 1 of the embodiment. RSP architecture in FIG. 8 includes a server 10₁ (SM-DP+), a server 10₂ (SM-SM), and the terminal device 40.

The server 10₁ is called subscription manager - data preparation + (SM-DP+). The SM-DP+ transmits a profile to an LPA of the eUICC of the terminal device 40.

The server 10₂ is called a subscription manager - discovery server (SM-DS). The SM-DS provides one or a plurality of addresses of SM-DP+ to local discovery service (LDS) of the terminal device 40.

The terminal device 40 is user equipment used in combination with an eUICC. The terminal device 40 has a function regarding storage and deletion of a profile regarding wireless communication. As illustrated in FIG. 8, the terminal device 40 includes a local profile assistant (LPA) for managing an eSIM profile and an embedded UICC (eUICC) for storing the eSIM profile.

The LPA is a functional element (software) having a function of recording a plurality of profiles in a terminal device (e.g., memory of eUICC). The LPA has a local profile download (LPD) function, a local discovery service (LDS) function, and a local user interface (LUI) function. The LPA may be a functional element in the terminal device 40 or a functional element in the eUICC.

The eUICC is a universal integrated circuit card (UICC) that enables local management of profiles in a secure method. The eUICC may be implemented on a substrate in the terminal device 40, or may be implemented on a card to be inserted into the terminal device 40. The eUICC includes LPA service and an LPA.

The LPA service is a functional element (software) that provides service necessary for an LPA function and necessary access to data. For example, a local profile assistant (LPA) is a functional element (software) that provides an LPD function, an LDS function, and a LUI function. The LPA has a function of recording a plurality of profiles in a memory of the eUICC.

### <<3. Operation of Communication System>>

The configuration of the communication system 1 has been described above. Next, the operation of the communication system 1 having the configuration will be described. The operation of the communication system 1 is divided into setting processing and operator change processing.

### <3-1. Setting Processing>

First, setting processing will be described. The setting processing is performed for setting, in the terminal device 40, a user requirement regarding communication using a cellular network.

In the setting processing to be described below, the terminal device 40 acquires a user requirement via a user interface. Note that, although, in the following description, the terminal device 40 acquires a user requirement via a user interface of the terminal device 40, a user interface for acquiring the requirement is not necessarily required to be the user interface of the terminal device 40. For example, the user interface for acquiring the requirement may be a user interface of another device (e.g., another terminal device connected wirelessly or by wire to terminal device 40).

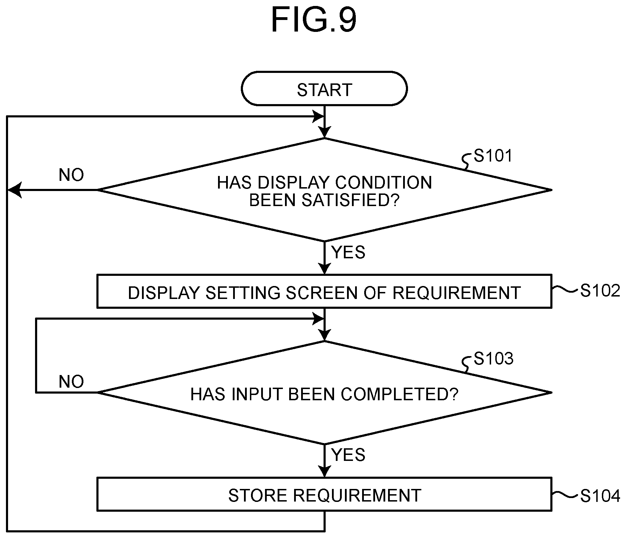

FIG. 9 is a flowchart illustrating an example of the setting processing. In the setting processing to be described below, the terminal device 40 acquires information on a plurality of cells with a fact that a predetermined condition (e.g., at least one of (A1) to (A3) to be described later) has been satisfied as a trigger. The control unit 43 of the terminal device 40 executes the setting processing. The setting processing will be described below with reference to the flowchart of FIG. 9.

The display control unit 435 of the terminal device 40 determines whether a display condition of a setting screen for inputting a user requirement (e.g., preferential operation setting) has been satisfied (Step S101). Assumed display conditions include (A1) to (A3) below.
(A1) Explicit user operation using user interface
(A2) Connection between terminal device 40 and another terminal device
(A3) Activation of tethering function

Here, examples of the other terminal device include external equipment such as a camera. Note that the other terminal device may have a configuration similar to that of the terminal device 40. In this case, the other terminal device is not necessarily required to have a wireless communication function as long as the terminal device has a function of connection with the terminal device 40.

When the display condition is satisfied, the display control unit 435 of the terminal device 40 displays the setting screen of the requirement (Step S102).

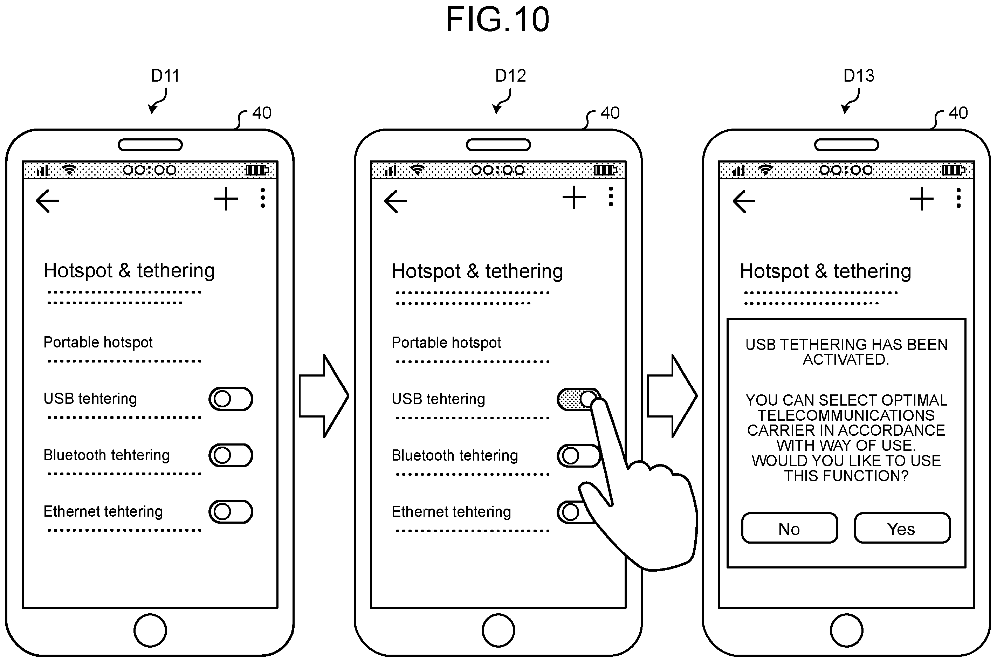

FIG. 10 illustrates how the setting screen of the requirement is opened with activation of a tethering function as a trigger. Furthermore, in an example of FIG. 10, the terminal device 40 can activate at least USB tethering, Bluetooth tethering, and Ethernet tethering. FIG. 10 illustrates a state D11 in which a setting screen for activating these three tethering functions is illustrated.

Here, it is assumed that the user activates a tethering function (USB tethering function in example of state D12 in FIG. 10) as illustrated in the state D12 of FIG. 10. In this case, for example, as illustrated in a state D13 of FIG. 10, the terminal device 40 inquires of the user whether or not to open the setting screen of the requirement. In an example of a state D13 of FIG. 10, the terminal device 40 displays a message "You can select an optimal telecommunications carrier in accordance with a way of use. Would you like to use this function?" in addition to a message "USB tethering has been activated".

Here, it is assumed that the user selects to open the setting screen of the requirement. It is assumed that the user taps "Yes" in the example of the state D13 of FIG. 10. In this case, the terminal device 40 displays the setting screen of the requirement.

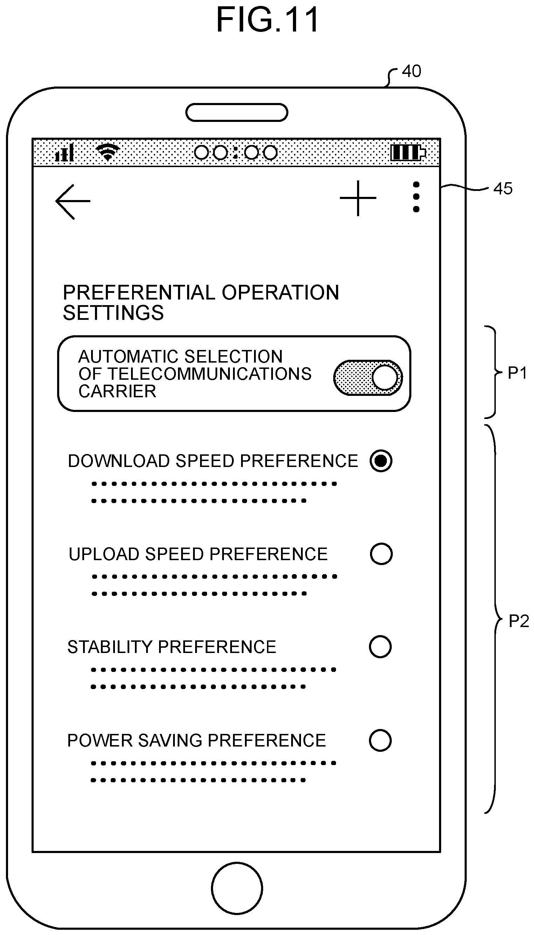

FIG. 11 illustrates an example of the setting screen of the requirement. FIG. 11 illustrates an input screen for preferential operation setting in an example of the setting screen of the requirement. The preferential operation setting relates to an operation that the user should prioritize the terminal device 40 in the operator change processing to be described later. For example, the preferential operation setting serves as a selection criterion at the time when the terminal device 40 selects an operator. The preferential operation setting can be rephrased as a preferential operation condition or a preferential mode. The user inputs a request for a communication environment expected by the user himself/herself to the setting screen in accordance with an application of the terminal device 40. Note that the input of a request includes selection of an option.

P1 in FIG. 11 represents a user interface for the user to activate/deactivate an operator automatic selection function. Here, the operator automatic selection function is implemented in the operator change processing to be described later.

Furthermore, P2 in FIG. 11 represents a user interface for the user to select the preferential operation setting. The user selects a requirement desired by the user himself/herself from a plurality of requirements (preferential operation settings) displayed on the user interface P2. The plurality of requirements (preferential operation settings) that can be selected by the user includes at least one condition selected from (B1) to (B4) below. Although four options of (B1) to (D4) below are displayed on the user interface P2, not necessarily all of the four options are required to be displayed. Furthermore, options other than the four options of (B1) to (D4) may be offered.
(B1) Download speed preference
(B2) Upload speed preference
(B3) Stability preference
(B4) Power saving preference

Here, the download speed preference is a setting for preferentially selecting an operator expected to have an accelerated (or maintained) download speed in a case where the terminal device 40 changes an operator in the operator change processing to be described later. The download speed preference may be rephrased as download preference.

Furthermore, the upload speed preference is a setting for preferentially selecting an operator expected to have an accelerated (or maintained) upload speed in a case where the terminal device 40 changes an operator in the operator change processing to be described later. The upload speed preference may be rephrased as upload preference.

Furthermore, the stability preference is a setting for preferentially selecting an operator expected to have an increased (or maintained) communication stability in a case where the terminal device 40 changes an operator in the operator change processing to be described later. The stability preference may be rephrased as communication quality preference.

Furthermore, the power saving preference is a setting for the terminal device 40 to prioritize power saving in the operator change processing to be described later.

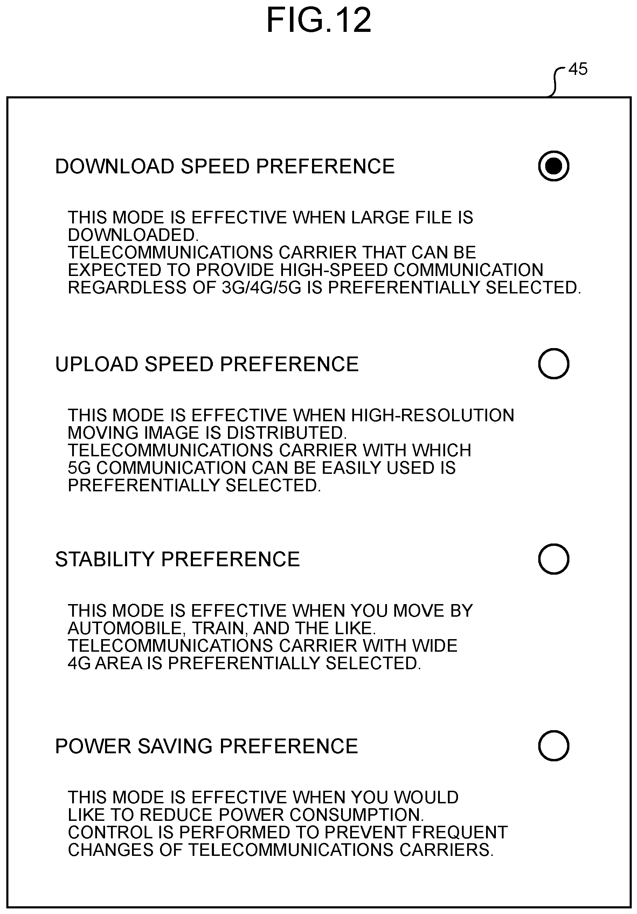

Note that the terminal device 40 may display names of the preferential modes and descriptions thereof on the user interface P2. FIG. 12 illustrates a display example of the names of the preferential modes and the descriptions thereof. In the example of FIG. 12, the terminal device 40 displays "download speed preference", "upload speed preference", "stability preference", and "power saving preference" as names of the preferential modes. Furthermore, in the example of FIG. 12, the terminal device 40 displays the descriptions of the preferential modes as follows.

For example, the terminal device 40 displays a description of the download speed preference of "This mode is effective when a large file is downloaded. A telecommunications carrier that can be expected to provide high-speed communication regardless of 3G/4G/5G is preferentially selected".

Furthermore, the terminal device 40 displays a description of the upload speed preference of "This mode is effective when a high-resolution moving image is distributed. A telecommunications carrier with which 5G communication can be easily used is preferentially selected".

Furthermore, the terminal device 40 displays a description of the stability preference of "This mode is effective when you move by automobile, train, and the like. A telecommunications carrier with a wide 4G area is preferentially selected".

Furthermore, the terminal device 40 displays a description of the power saving preference of "This mode is effective when you would like to reduce power consumption. Control is performed to prevent frequent changes of telecommunications carriers".

Note that the display example in FIG. 12 is merely an example. The names of the preferential modes and the descriptions thereof are not limited to those in the example in FIG. 12.

Note that a requirement that can be set by the user is not limited to the preferential operation setting. For example, the requirement that can be set by the user may be an operator change condition (operator change trigger). Examples of the operator change condition include (C1) to (C3) below.
(C1) Explicit user operation
(C2) Deterioration in quality of communication
(C3) Request from operator

Here, examples of the explicit user operation include an explicit operator change operation performed by the user. Examples of the deterioration in quality of communication include a decrease in radio wave intensity and congestion of radio resources. The request from an operator is an instruction from the operator to cause the terminal device 40 to use another operator. For example, the request from the operator is an instruction to use another operator at the time when a communication failure occurs.

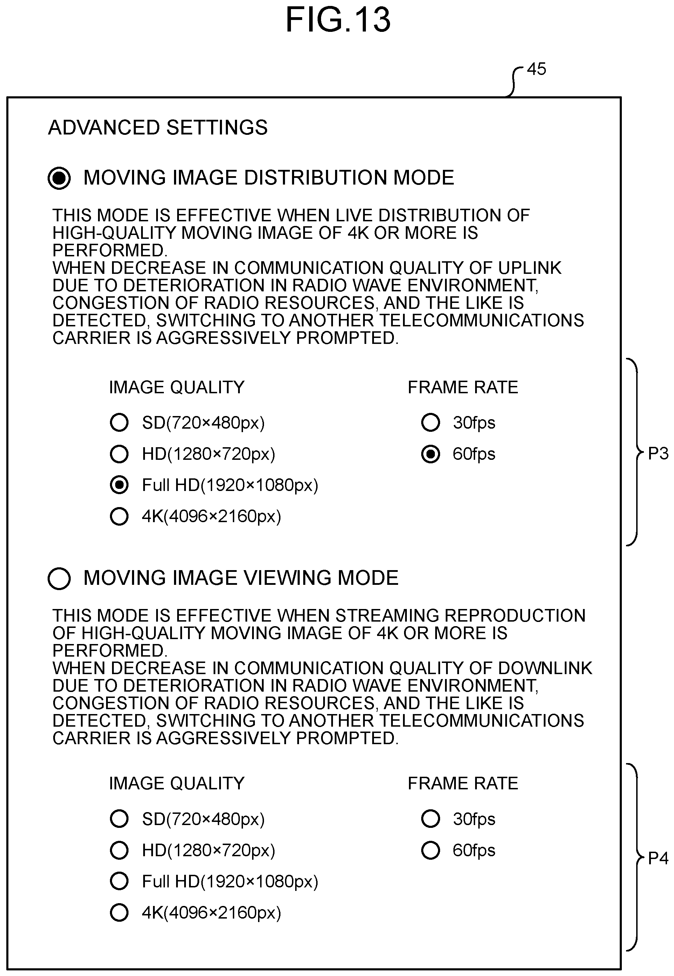

FIG. 13 illustrates an example of the setting screen of the operator change condition. FIG. 13 illustrates an input screen of a communication quality request from the user in an example of the setting screen of the operator change condition. Specifically, in FIG. 13, (D1) and (D2) below are displayed as input interfaces of the communication quality request.
(D1) Moving image distribution mode
(D2) Moving image viewing mode

In an example of FIG. 13, the user can select either the moving image distribution mode or the moving image viewing mode. Note that, although two options of (D1) and (D2) above are displayed in FIG. 13, not necessarily all of the two options are required to be displayed. Furthermore, options other than the two options of (D1) and (D2) above may be offered.

Here, the moving image distribution mode is set in a case where the user requests an uplink speed guarantee. P3 in FIG. 13 represents a user interface for inputting a communication speed (or information for calculating communication speed) required by the user for the uplink as an input interface of the communication quality request. In the example of FIG. 13, the user interface P3 is configured to be able to input information on the quality (SD/HD/FullHD/4K) and the frame rate (30 fps/60 fps) of a moving image distributed by the user as the information for calculating a communication speed required by the user for the uplink. When information is input to the user interface P3, the terminal device 40 calculates the communication speed required by the user for the uplink (communication speed serving as operator change condition) based on the input information. Note that the input of information to the user interface includes selection of an option made by the user.

Furthermore, the moving image viewing mode is set in a case where the user requests a downlink speed guarantee. P4 in FIG. 13 represents a user interface for inputting a communication speed (or information for calculating communication speed) required by the user for the downlink as an input interface of the communication quality request. In the example of FIG. 13, the user interface P4 is configured to be able to input information on the quality (SD/HD/FullHD/4K) and the frame rate (30 fps/60 fps) of a moving image distributed by the user. When information is input to the user interface P4, the terminal device 40 calculates the communication speed required by the user for the downlink (communication speed serving as operator change condition) based on the input information. As described above, the input of information to the user interface includes selection of an option made by the user.

Returning to the flow of FIG. 9, the first acquisition unit 431 of the terminal device 40 determines whether the input of a requirement from the user has been completed (Step S103). When the input has not been completed (Step S103: No), the first acquisition unit 431 waits until the input is completed.

When the input has been completed (Step S103: Yes), the first acquisition unit 431 of the terminal device 40 acquires the requirement input to the user interface, and stores the acquired requirement in the storage unit 42 (Step S104). Note that the first acquisition unit 431 may store the requirement in another device. For example, the first acquisition unit 431 may store the requirement in another terminal device connected to the terminal device 40 by a tethering function, or may store the requirement in a server device on a cloud.

When the storage is completed, the control unit 43 of the terminal device 40 returns the processing to Step S101, and monitors satisfaction of the display condition of the setting screen.

### <3-2. Operator Change Processing>

Next, the operator change processing will be described. In the operator change processing, an operator is changed based on a user requirement.

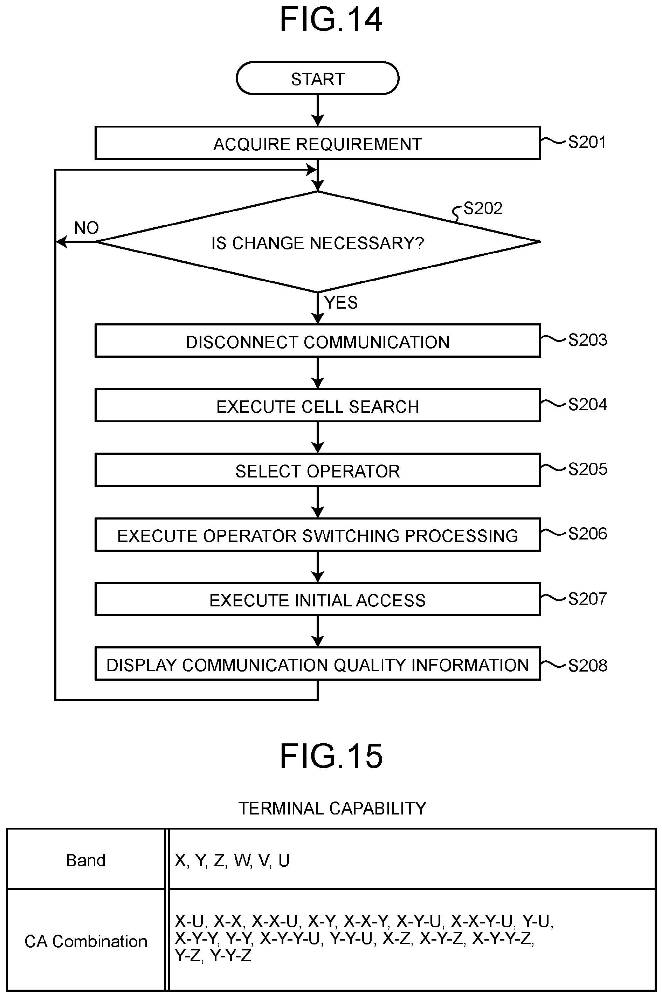

FIG. 14 is a flowchart illustrating an example of the operator change processing. The control unit 43 of the terminal device 40 executes the operator change processing. The setting processing will be described below with reference to the flowchart of FIG. 14.

First, the first acquisition unit 431 of the terminal device 40 acquires the user requirement regarding communication using a cellular network (Step S201). The user requirement is, for example, a preferential operation setting. As described above, the plurality of requirements (preferential operation settings) that can be selected by the user includes at least one condition selected from the download speed preference, the upload speed preference, the stability preference, and the power saving preference. The first acquisition unit 431 acquires a requirement (preferential operation setting) selected by the user from a plurality of conditions as a requirement for selecting an operator.

Note that the user requirement acquired by the first acquisition unit 431 may include the operator change condition. As described above, the operator change condition may be a communication quality request from the user. The first acquisition unit 431 acquires a requirement (operator change condition) selected by the user from a plurality of conditions as a requirement for changing an operator.

Note that the first acquisition unit 431 may acquire the requirement from the storage unit 42, or may acquire the requirement from another device. For example, the first acquisition unit 431 may acquire the requirement from another terminal device connected to the terminal device 40 by a tethering function, or may acquire the requirement from a server device on a cloud.

Next, the determination unit 432 of the terminal device 40 determines whether an operator change is necessary (Step S202). The operator change condition may be an explicit user operation or a communication quality request from the user.

In a case where the explicit user operation is set as an operator change condition, the determination unit 432 determines that the operator change is necessary when detecting a predetermined operation to the terminal device 40 (or another terminal device connected to terminal device 40).

Furthermore, in a case where the communication quality request from the user is set as an operator change condition, the operator change is determined as being necessary when the communication quality request becomes dissatisfied. For example, when the operator change condition is information (e.g., image quality and frame rate) for calculating a communication speed required by the user for the uplink/downlink, which has been input by using the user interface in FIG. 13. In this case, the determination unit 432 first calculates the communication speed required by the user for the uplink/downlink based on the information input by the user. Thereafter, the determination unit 432 calculates a theoretical value of a communication speed in the current communication based on information on a resource block allocated from the base station 30, a modulation and coding scheme (MCS), and the like. When the theoretical value falls below the communication speed required by the user for the uplink/downlink, the determination unit 432 determines that the operator change is necessary.

When the operator change is not necessary (Step S202: No), the control unit 43 of the terminal device 40 continues the current communication, and repeats the processing of Step S202.

When the operator change is necessary (Step S202: Yes), the communication control unit 436 of the terminal device 40 disconnects one or a plurality of currently used wireless communications (Step S203). For example, the communication control unit 436 disconnects the current cellular communication associated with one or more SIMs. Note that, when there is a plurality of SIMs in the terminal device 40, the communication control unit 436 is not necessarily required to disconnect all cellular communications. The communication control unit 436 may continue cellular communications with some SIMs of the plurality of SIMs.

Thereafter, the communication control unit 436 of the terminal device 40 executes cell search for all cells that can be received by the terminal device 40 (Step S204). Then, the second acquisition unit 433 of the terminal device 40 acquires information on all cells that can be searched for by the terminal device 40 across a plurality of operators.

Note that the cell information is not necessarily required to be acquired at the timing. For example, the second acquisition unit 433 of the terminal device 40 may acquire information on a plurality of cells with a fact that a predetermined condition (e.g., at least one of (E1) to (E3) below) has been satisfied as a trigger.
(E1) Explicit user operation using user interface
(E2) Connection between terminal device 40 and another terminal device
(E3) Activation of tethering function of terminal device 40

Note that the user interface in (E1) may be a user interface of the terminal device 40 or a user interface of another device (e.g., another terminal device connected wirelessly or by wire to terminal device 40). Here, examples of the other terminal device (including another terminal device in (E2)) include external equipment such as a camera. Note that the other terminal device may have a configuration similar to that of the terminal device 40. In this case, the other terminal device is not necessarily required to have a wireless communication function as long as the terminal device has a function of connection with the terminal device 40.

Note that the conditions in (E1) to (E3) above are merely examples. The second acquisition unit 433 of the terminal device 40 may acquire information on a plurality of cells with a fact that a condition other than the conditions in (E1) to (E3) above has been satisfied as a trigger.

For example, the second acquisition unit 433 acquires the information on a plurality of cells with a fact that the quality of the currently used communication falls below a predetermined criterion (e.g., predetermined threshold) as a trigger. Here, the "quality of communication" may be represented by a value identified based on at least one of reference signals received power (RSRP), reference signal received quality (RSRQ), and a signal-to-noise ratio (SINR).

Furthermore, the second acquisition unit 433 may acquire the information on a plurality of cells with a fact that the quality of communication associated with any SIM (SIM profile) inserted into or embedded in the terminal device 40 satisfies a predetermined criterion as a trigger. Here, the "communication associated with any SIM (SIM profile)" may be cellular communication currently unused for a predetermined application (e.g., upload/download of moving image). Furthermore, the "fact that the quality of communication has satisfied a predetermined criterion" may include a fact that the quality of communication has exceeded a predetermined threshold. For example, the "fact that the quality of communication has satisfied a predetermined criterion" may include a fact that communication quality has exceeded that of the currently used cellular communication by a predetermined value or more. Of course, the "fact that the quality of communication has satisfied a predetermined criterion" may include a fact that the quality of communication has fallen below a predetermined threshold. Note that the "quality of communication" may be represented by a value identified based on at least one of RSRP, RSRQ, and SINR.

Then, the selection unit 434 of the terminal device 40 selects an operator to be used for communication based on the user requirement (preferential operation setting) acquired in Step S201, the information on all the cells acquired in Step S204, and capability information on the terminal device 40 regarding the wireless communication (e.g., cellular communication) (Step S205). Note that selecting an operator includes reselecting an operator.

Here, the capability information on the terminal device 40 regarding wireless communication relates to cellular communication using two or more component carriers (CCs), for example. Examples of the cellular communication using two or more CCs include carrier aggregation (CA) and/or dual connectivity (DC).

Here, examples of the CA that can be used by the terminal device 40 may include one or a plurality of CCs selected from 2 carrier aggregation (2CA) using two CCs, 3 carrier aggregation (3CA) using three CCs, 4 carrier aggregation (4CA) using four CCs, and 5 carrier aggregation (5CA) using five CCs. Furthermore, examples of the DC that can be used by the terminal device 40 may include one or a plurality of DLs selected from E-UTRAN New Radio - Dual Connectivity (EN-DC) using CCs of LTE and NR and New Radio - Dual Connectivity (NR-DC) using a CC of NR. The terminal device 40 holds information indicating which of these can be used by the terminal device 40 itself as capability information.

Note that the capability information on the terminal device 40 regarding wireless communication may relate to cellular communication using two or more cells. For example, the capability information on the terminal device 40 regarding wireless communication may relate to cellular communication using two or more CCs of different cells.

As described above, the plurality of requirements (preferential operation settings) that can be selected by the user includes at least one condition selected from (B1) download speed preference, (B2) upload speed preference, (B3) stability preference, and (B4) power saving preference. The selection unit 434 of the terminal device 40 selects an operator by using a different operator selection criterion for each requirement (preferential operation setting).

In the case, the selection unit 434 may identify a combination of component carriers that can be used by the terminal device 40 for cellular communication based on information on a plurality of cells and capability information on the terminal device 40 regarding cellular communication using two or more component carriers. Then, the selection unit 434 may select an operator based on information on cellular communication for each combination of component carriers. For example, the selection unit may select an operator based on information on an expected communication speed for each combination of component carriers. Furthermore, the selection unit 434 may select an operator based on information on the number of component carriers for each combination of component carriers.

An operator selection operation of the selection unit 434 will be specifically described below for each of (B1) to (B4).

### (B1) Download speed preference

First, an operator selection operation of the selection unit 434 in a case where the user requirement (preferential operation setting) is download speed preference will be described.

When the user requirement (preferential operation setting) is download speed preference, the selection unit 434 of the terminal device 40 preferentially selects an operator expected to have an accelerated (or maintained) download speed. For example, the selection unit 434 may select an operator based on information on the number of component carriers for each combination of component carriers. For example, the selection unit 434 may select an operator having a large number of component carriers made usable by carrier aggregation (CA). More specifically, the selection unit 434 may select an operator as follows.

For example, the selection unit 434 identifies a combination (e.g., carrier aggregation combination (CA combination)) of component carriers that can be currently used by the terminal device 40 for cellular communication based on information on a plurality of cells and capability information on the terminal device 40 (hereinafter, also referred to as terminal capability (UE capability)) regarding cellular communication using two or more component carriers. For example, the selection unit 434 identifies a CA combination (downlink CA combination) expected to be currently usable from combinations of a band of a receivable cell and terminal capability.

FIGS. 15 to 17 illustrate a method of identifying a CA combination. The method of identifying a CA combination expected to be currently usable will be described below with reference to FIGS. 15 to 17.

FIG. 15 illustrates information on the terminal capability of a certain terminal device 40. FIG. 15 illustrates an example in which the terminal device 40 has capability of using bands X, Y, Z, W, V, and U. Furthermore, FIG. 15 illustrates the example in which combinations of component carriers that can be used by the terminal device 40 include X-U, X-X, X-X-U, X-Y, X-X-Y, X-Y-U, X-X-Y-U, Y-U, X-Y-Y, Y-Y, X-Y-Y-U, Y-Y-U, X-Z, X-Y-Z, X-Y-Y-Z, Y-Z, and Y-Y-Z.

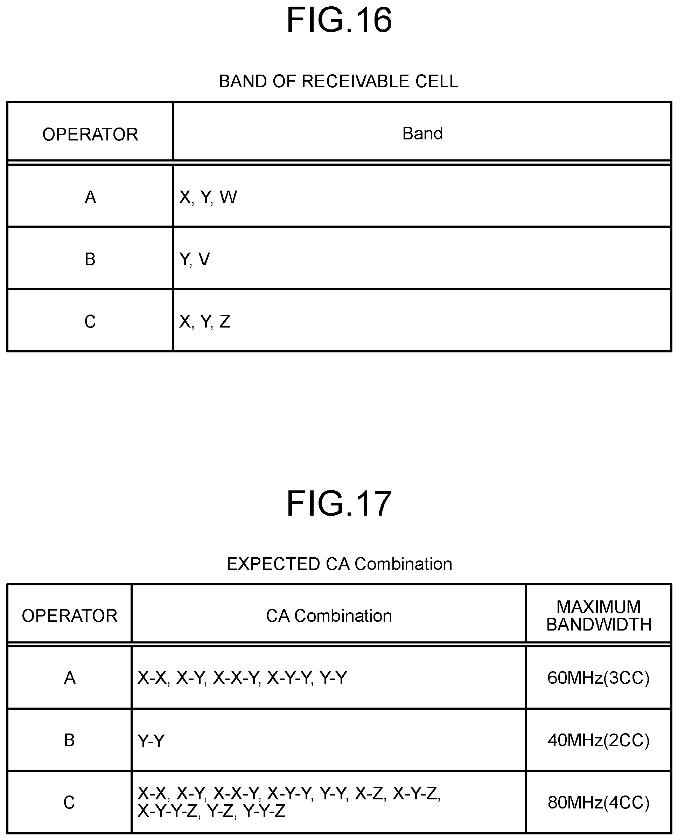

FIG. 16 illustrates a result of cell search (information on plurality of cells). Specifically, FIG. 16 illustrates information on a band of a cell that can be currently received by the terminal device 40 for each of operators A, B, and C. Specifically, FIG. 16 illustrates that the terminal device 40 can currently use the bands X, Y, and W for the operator A, currently use the bands Y and V for the operator B, and currently use the bands X, Y, and Z for the operator B.

The selection unit 434 of the terminal device 40 identifies a CA combination expected to be currently usable based on the information in FIGS. 15 and 16. FIG. 17 illustrates a result of identifying the CA combination expected to be currently usable based on the information in FIGS. 15 and 16. Specifically, FIG. 17 illustrates that the terminal device 40 can currently use CA combinations of X-X, X-Y, X-X-Y, X-Y-Y, and Y-Y for the operator A. Furthermore, FIG. 17 illustrates that the terminal device 40 can currently use a CA combination of Y-Y for the operator B. Furthermore, FIG. 17 illustrates that the terminal device 40 can currently use CA combinations of X-X, X-Y, X-X-Y, X-Y-Y, Y-Y, X-Z, X-Y-Z, X-Y-Y-Z, Y-Z, and Y-Y-Z for the operator C.

That is, in an example of FIG. 17, when using cellular communication of the operator A, the terminal device 40 can use three CCs of X-X-Y or X-Y-Y at the maximum. Furthermore, when using cellular communication of the operator B, the terminal device 40 can use two CCs of Y-Y at the maximum. Furthermore, when using cellular communication of the operator C, the terminal device 40 can use four CCs of X-Y-Y-Z at the maximum. Assuming that one band has a bandwidth of 20 MHz, the terminal device 40 can use a bandwidth of 60 MHz at the maximum when using the cellular communication of the operator A. Furthermore, when using the cellular communication of the operator B, the terminal device 40 can use a bandwidth of 40 MHz at the maximum. Furthermore, when using the cellular communication of the operator C, the terminal device 40 can use a bandwidth of 80 MHz at the maximum.

Note that the above-described method is merely an example. A method of identifying a CA combination expected to be currently usable is not limited to the above-described method. Furthermore, a combination of component carriers to be identified is not limited to a CA combination. For example, the terminal device 40 may identify an E-UTRAN New Radio - Dual Connectivity (EN-DC) combination expected to be currently usable. For example, the terminal device 40 may identify a New Radio - Dual Connectivity (NR-DC) combination expected to be currently usable.

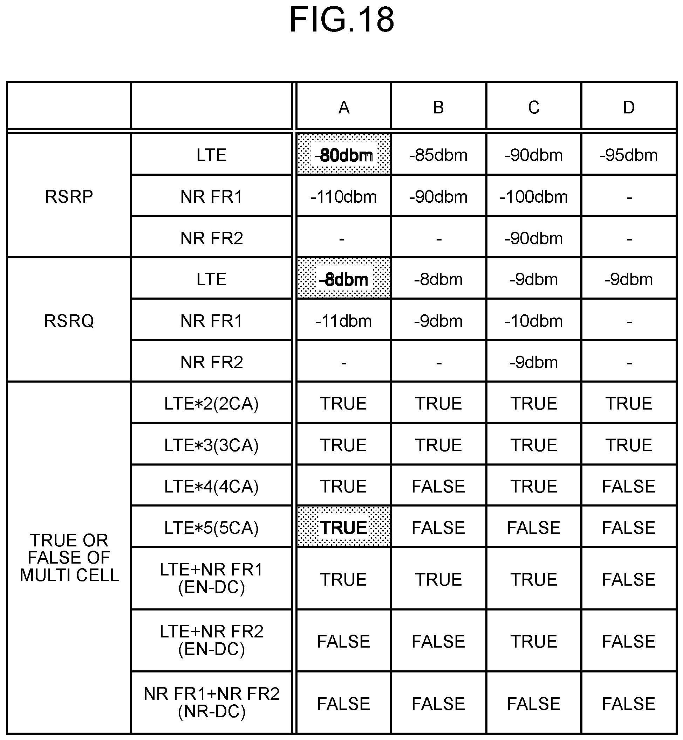

FIG. 18 illustrates a result of identifying a combination of component carriers expected to be currently usable for each operator. In the figure, a result indicated in a column of true or false of a multi cell is an identification result. In an example of FIG. 18, 2CA (LTE × 2), 3CA (LTE × 3), 4CA (LTE × 4), 5CA (LTE × 5), and EN-DC (LTE + NR FR1) can be currently used for the operator A. Furthermore, 2CA (LTE × 2), 3CA(LTE × 3), and EN-DC (LTE + NR FR1) can be currently used for the operator B. Furthermore, 2CA (LTE × 2), 3CA (LTE × 3), 4CA (LTE × 4), EN-DC (LTE + NR FR1), and EN-DC (LTE + NR FR2) can be currently used for the operator C. Furthermore, 2CA (LTE × 2) and 3CA (LTE × 3) can be currently used for the operator D.

The terminal device 40 may acquire a result of measuring communication quality for each operator in addition to the result of identifying a combination of component carriers expected to be currently usable. FIG. 18 illustrates the result of measuring communication quality for each operator in addition to the result of identifying a combination of component carriers. Specifically, FIG. 18 illustrates RSRP and RSRQ for each of LTE and NR (NR FR1 and NR FR2).

Then, the selection unit 434 of the terminal device 40 selects an operator based on selection criteria in (F1) and (F2) below.
(F1) Operator having LTE communication quality (e.g., RSRP and/or RSRQ) of certain value or more
(F2) Operator including CA having largest number of CCs among CAs expected to be currently usable

For example, the selection unit 434 selects an operator including CA having the largest number of CCs among operators having RSRP of LTE of -90 dBm or more and having RSRQ of LTE of -9 dBm or more. In the example of FIG. 18, the operator A having the number of CCs of five includes CA having the largest number of CCs. For the operator A, RSRP of LTE is -80 dBm, and RSRQ of LTE is -8 dBm, which satisfy the criterion. Thus, the selection unit 434 selects the operator A as an operator of a change destination.

Note that the selection criteria are not limited to (F1) and (F2) above. Any of (F1) and (F2) above may be adopted as a selection criterion. Furthermore, the selection unit 434 may use, as a selection criterion, not only the number of CCs but a theoretical value of a throughput calculated from a combination of CCs to be used and a bandwidth of each CC. In the case, the selection criterion may include both the number of CCs and the theoretical value of the throughput, or may include either the number of CCs or the theoretical value of the throughput. Note that the value of a bandwidth of a CC may be different depending on, for example, a country and a region. Furthermore, when the selection criterion includes communication quality, the communication quality is not limited to RSRP and/or RSRQ, and may be represented by, for example, an SINR. Of course, the communication quality may be a value calculated based on these values.

### (B2) Upload speed preference

Next, an operator selection operation of the selection unit 434 in a case where the user requirement (preferential operation setting) is upload speed preference will be described.

When the user requirement (preferential operation setting) is upload speed preference, the selection unit 434 of the terminal device 40 preferentially selects an operator expected to have an accelerated (or maintained) upload speed. For example, the selection unit 434 selects an operator capable of using a wide bandwidth of NR by EN-DC. In the case, the selection unit 434 may select an operator based on information on whether or not EUTRAN-NR Dual Connectivity (EN-DC) can be used.

For example, the selection unit 434 identifies a combination of component carriers that can be currently used by the terminal device 40 for cellular communication based on information on a plurality of cells and capability information on the terminal device 40 (hereinafter, also referred to as terminal capability (UE capability)) regarding cellular communication using two or more component carriers. For example, the selection unit 434 identifies an EN-DC combination expected to be currently usable from combinations of a band of a receivable cell and terminal capability. The method of identifying the EN-DC combination may be similar to the method described in the part of the above-described download speed preference.

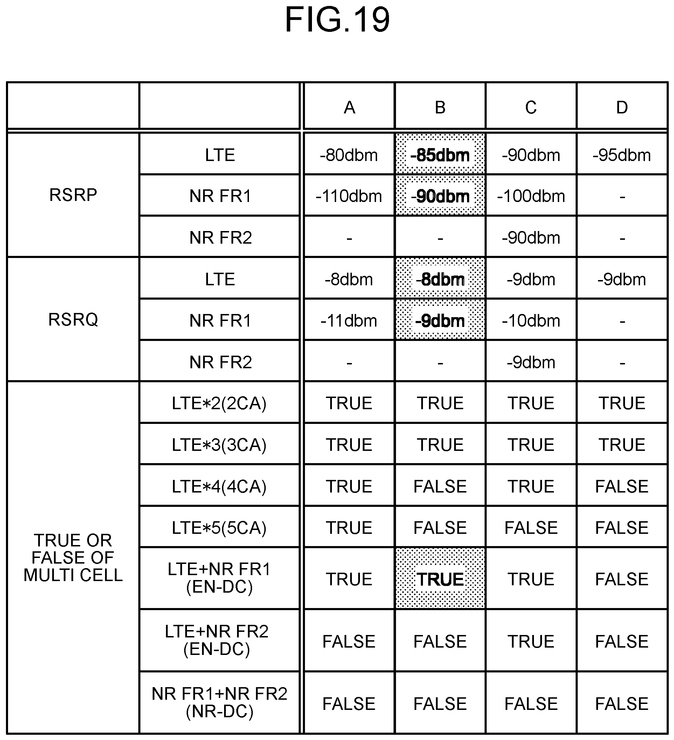

FIG. 19 illustrates a result of identifying a combination of component carriers expected to be currently usable for each operator. In the figure, a result indicated in a column of true or false of a multi cell is an identification result. In an example of FIG. 19, 2CA (LTE × 2), 3CA (LTE × 3), 4CA (LTE × 4), 5CA (LTE × 5), and EN-DC (LTE + NR FR1) can be currently used for the operator A. Furthermore, 2CA (LTE × 2), 3CA(LTE × 3), and EN-DC (LTE + NR FR1) can be currently used for the operator B. Furthermore, 2CA (LTE × 2), 3CA (LTE × 3), 4CA (LTE × 4), EN-DC (LTE + NR FR1), and EN-DC (LTE + NR FR2) can be currently used for the operator C. Furthermore, 2CA (LTE × 2) and 3CA (LTE × 3) can be currently used for the operator D.

The terminal device 40 may acquire a result of measuring communication quality for each operator in addition to the result of identifying a combination of component carriers expected to be currently usable. FIG. 19 illustrates the result of measuring a communication quality for each operator in addition to the result of identifying a combination of component carriers. Specifically, FIG. 19 illustrates RSRP and RSRQ for each of LTE and NR (NR FR1 and NR FR2).

Then, the selection unit 434 of the terminal device 40 selects an operator based on selection criteria in (G1) to (G3) below.
(G1) Operator having LTE communication quality (e.g., RSRP and/or RSRQ) of certain value or more
(G2) Operator having NR communication quality (e.g., RSRP and/or RSRQ) of certain value or more
(G3) Operator expected to use EN-DC

For example, the selection unit 434 selects an operator described to use EN-DC from operators having RSRP of LTE and NR of -90 dBm or more and having RSRQ of LTE and NR of -9 dBm or more. In the example of FIG. 19, the operators A, B, and C are expected to use EN-DC. For the operator B thereamong, RSRP of LTE is -85 dBm, RSRQ of LTE is -8 dBm, RSRP of NR is -90 dBm, and RSRQ of LTE is -9 dBm, which satisfy the criterion. Thus, the selection unit 434 selects the operator B as an operator of a change destination.

Note that the selection criteria are not limited to (G1) to (G3) above. One or a plurality of selection criteria may be selected from (G1) to (G3) above. Furthermore, the selection unit 434 may use the number of CCs as a selection criterion, or may use a theoretical value of a throughput as a selection criterion. Furthermore, when the selection criterion includes communication quality, the communication quality is not limited to RSRP and/or RSRQ, and may be represented by, for example, an SINR. Of course, the communication quality may be a value calculated based on these values.

### (B3) Stability preference

Next, an operator selection operation of the selection unit 434 in a case where the user requirement (preferential operation setting) is stability preference will be described.

When the user requirement (preferential operation setting) is stability preference, the selection unit 434 of the terminal device 40 preferentially selects an operator expected to be able to stably and continuously perform communication. For example, the selection unit 434 selects an operator determined to be able to stably and continuously perform communication based not on a dynamically changing radio wave environment but area information provided from each of a plurality of operators. For example, the selection unit 434 selects an operator determined to have the largest coverage of 4G area (and/or 5G area) in a peripheral area of the terminal device 40 (e.g., area in predetermined range from current position of terminal device 40) based on the area information provided from each of a plurality of operators.

### (B4) Power saving preference

Next, an operator selection operation of the selection unit 434 in a case where the user requirement (preferential operation setting) is power saving preference will be described.

When the user requirement (preferential operation setting) is power saving preference, the selection unit 434 of the terminal device 40 prioritizes continuation of use of the currently used operator. The selection unit 434 basically does not reselect an operator while activating the function (operator change function). The selection unit 434 reselects an operator only when the quality of communication associated with any SIM remarkably decreases and communication with the operator becomes difficult. That is, when the user requirement (preferential operation setting) is the above-described power saving preference, the selection unit 434 selects an operator with a fact that the quality of the currently used cellular communication falls below a predetermined criterion as a trigger. Here, the quality of cellular communication may be represented by a value identified based on at least one of RSRP, RSRQ, and SINR.

Returning to the flow of FIG. 14, the control unit 43 of the terminal device 40 executes processing of switching to the operator selected in Step S205 (Step S206).

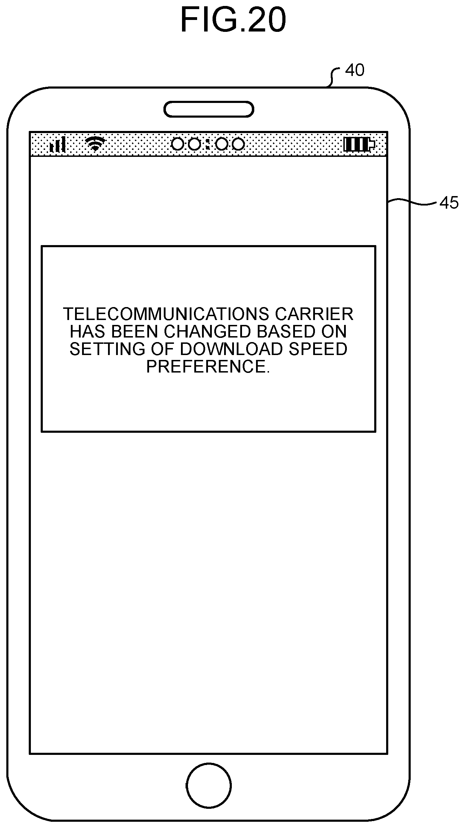

For example, when a contract has been already made with the operator selected in Step S205, the communication control unit 436 of the terminal device 40 automatically switches to the operator. Then, the communication control unit 436 starts initial access to a cellular network of the corresponding operator (Step S207). When the initial access is successful, the display control unit 435 of the terminal device 40 notifies the user that the operator has been changed. FIG. 20 illustrates an example of notification regarding the operator change. The notification to the user may include information on the requirement set by the user. For example, it is assumed that the user requirement (preferential operation setting) is download preference. In this case, the display control unit 435 may display, on the terminal device 40, a message "A telecommunications carrier has been changed based on the setting of download speed preference", for example.

Note that, although, in an example of FIG. 20, the display control unit 435 displays a notification message on the terminal device 40, the display control unit 435 may control another device to display the notification message on the terminal device 40 the other device (e.g., another terminal device connected by tethering function).

In contrast, when a contract has not been made with the operator selected in Step S205, the display control unit 435 of the terminal device 40 notifies the user that the communication quality falls below the user requirement, and displays, on the user interface, information for the user to make a contract with the operator with which a contract has not been made.

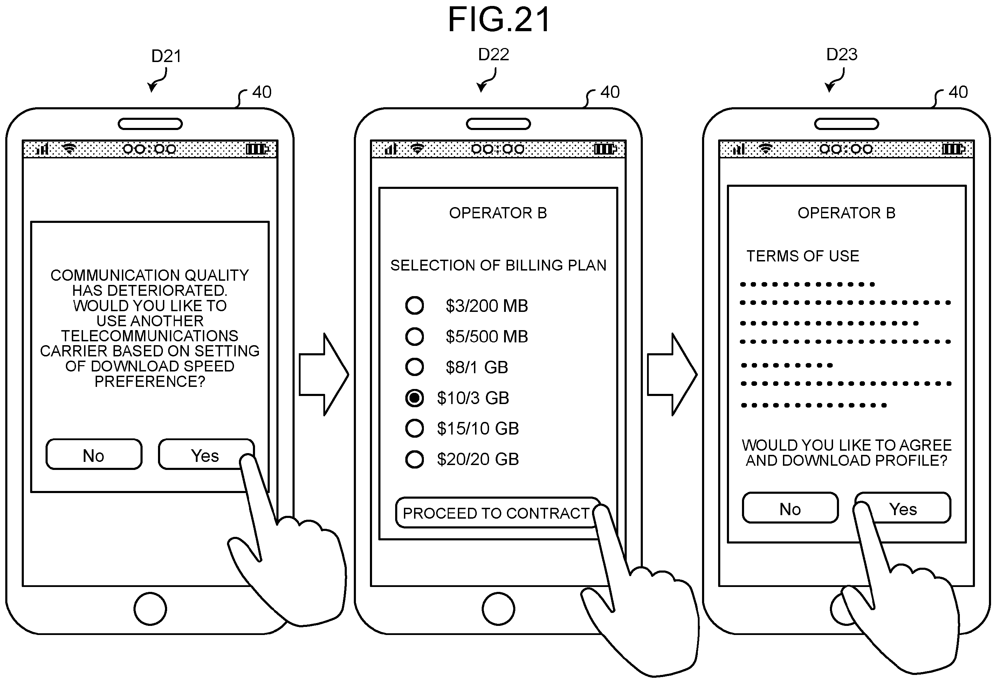

FIG. 21 illustrates how the user makes a contract with an operator. When a contract has not been made with the operator selected in Step S205, the display control unit 435 of the terminal device 40 notifies the user that the communication quality has deteriorated, and inquires of the user whether or not to use another operator as illustrated in a state D21 in FIG. 21, for example. In the case, the display control unit 435 may display, on the terminal device 40, a message "Communication quality has deteriorated. Would you like to use another telecommunications carrier based on the setting of download speed preference?".

When the user selects to use another operator (Yes in state D21), the display control unit 435 displays a billing plan selection screen as illustrated in a state D22 in FIG. 21, for example. When the user selects a billing plan (proceeds to contract in state D22), the display control unit 435 presents information on the operator to the user, and requests the user to agree with terms of use as illustrated in a state D23 in FIG. 21, for example.

Note that, although, in an example of FIG. 21, the user takes a contract procedure with the operator via the user interface displayed on the terminal device 40, the display control unit 435 of the terminal device 40 may control another device to display the user interface for making a contract with the operator on the other device (e.g., another terminal device connected by tethering function).

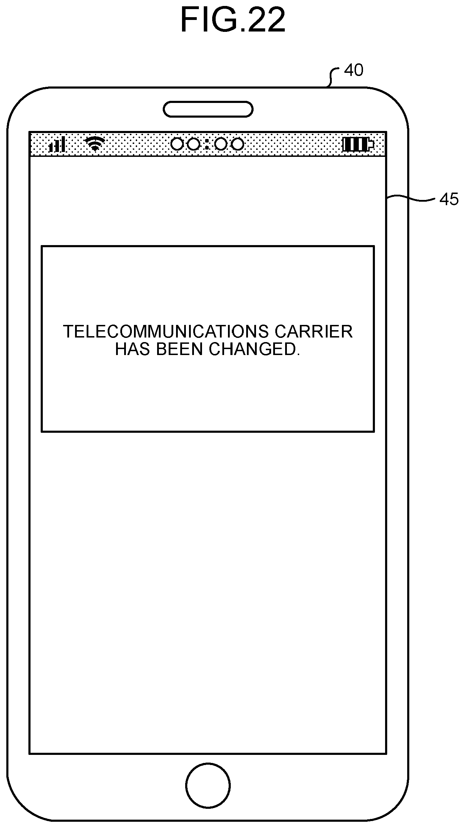

When the user agrees with the terms of use (Yes in state D23), the communication control unit 436 of the terminal device 40 downloads a SIM profile from the server 10 of the corresponding operator. The control unit 43 of the terminal device 40 makes a setting of the downloaded SIM profile to the terminal device 40. When the setting is completed, the communication control unit 436 starts initial access with the corresponding SIM (Step S207). When the initial access is successful, the display control unit 435 of the terminal device 40 notifies the user that the operator has been changed. FIG. 22 illustrates an example of notification regarding the operator change.

Note that, although, in an example of FIG. 22, the display control unit 435 displays a notification message on the terminal device 40, the display control unit 435 may control another device to display the notification message on the other device (e.g., another terminal device connected by tethering function).

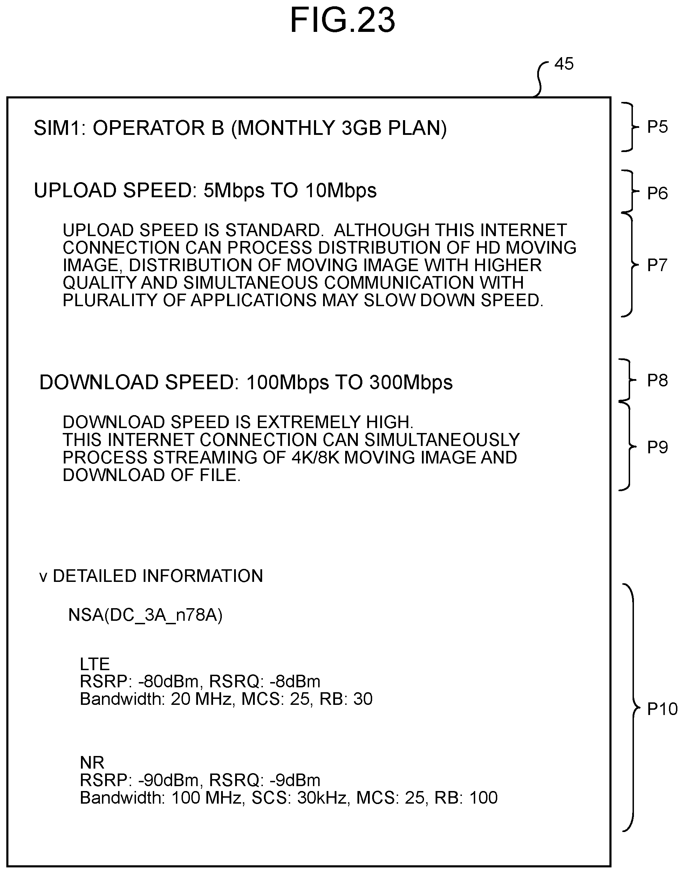

Returning to the flow of FIG. 14, the display control unit 435 of the terminal device 40 displays communication quality information on the currently connected cellular communication (Step S208). FIG. 23 illustrates a display example of the communication quality information. In an example of FIG. 23, the display control unit 435 displays information on a currently used operator and communication quality information on cellular communication of the operator.

Information in P5 of FIG. 23 relates to the currently used operator. In the example of FIG. 23, the display control unit 435 displays an operator name and a billing plan as the information on the operator.

Furthermore, in the example of FIG. 23, theoretical values of communication speeds are displayed as the communication quality information. Pieces of information in P6 and P8 of FIG. 23 are the theoretical values of the communication speeds. P6 in FIG. 23 is a theoretical value of an upload speed. P8 in FIG. 23 is a theoretical value of a download speed. In the example of FIG. 23, evaluation messages for the theoretical values of the communication speeds are also displayed. Pieces of information in P7 and P9 of FIG. 23 are the evaluation messages. P7 in FIG. 23 is an evaluation message for the theoretical value of the upload speed. P9 in FIG. 23 is an evaluation message for the theoretical value of the download speed.

Furthermore, in the example of FIG. 23, information necessary for calculating a theoretical value of a communication speed is also displayed as communication quality information. Information in P10 of FIG. 23 is necessary for calculating the theoretical value of a communication speed. In the example of FIG. 23, the display control unit 435 displays information on actually used CA and EN-DC in addition to information on resource blocks allocated from the base station 30, an MCS, and the like. The display control unit 435 may also display information of RSRP, RSRQ, and a bandwith as communication quality information. Information in P10 of FIG. 23 corresponds to a result of the operator selection.

Note that the communication quality information is not necessarily required to be displayed at the timing. For example, the display control unit 435 of the terminal device 40 may display the communication quality information with a fact that a predetermined condition (e.g., at least one of (H1) to (H3) below) has been satisfied as a trigger.
(E1) Explicit user operation using user interface
(E2) Connection between terminal device 40 and another terminal device
(E3) Activation of tethering function of terminal device 40

Note that, although, in the example of FIG. 23, the display control unit 435 displays communication quality information on the terminal device 40, the display control unit 435 may control another device to display the communication quality information on the other device (e.g., another terminal device connected by tethering function).

When the display of the communication quality information is completed, the control unit 43 of the terminal device 40 returns the processing to Step S202, and monitors whether or not an operator change is necessary.

According to the embodiment, the terminal device 40 can select an appropriate operator at the current location in accordance with a user requirement. As a result, the terminal device 40 can implement stable communication even in a communication environment without prior information.

### <<4. Variation>>

The above-described embodiment is an example, and various changes and applications are possible.

Although, in the above-described embodiment, the terminal device 40 is connected to another terminal device by a tethering function, the other terminal device is not necessarily required to be connected to the terminal device 40. Purely when the user uses the terminal device 40, the above-described embodiment (e.g., operator change) may be executed. Furthermore, the other terminal device may be connected to the terminal device 40 by a function other than the tethering function.

Furthermore, although, in the above-described embodiment, the user requirement is set in the terminal device 40 in the setting processing, another communication device may acquire the user requirement. In the case, the other communication device may be another terminal device connected to the terminal device 40 by a tethering function or another terminal device connected to the terminal device 40 by a function other than the tethering function.

A control device that controls the server 10, the management device 20, the base station 30, or the terminal device 40 of the embodiment may be implemented by a dedicated computer system or a general-purpose computer system.

For example, a communication program for executing the above-described operation is stored in a computer-readable recording medium such as an optical disk, a semiconductor memory, a magnetic tape, and a flexible disk to be distributed. Then, for example, the program is installed in a computer, and the above-described processing is executed to constitute a control device. In the case, the control device may be a device (e.g., personal computer) outside the server 10, the management device 20, the base station 30, and the terminal device 40. Furthermore, the control device may be a device (e.g., control unit 13, control unit 23, control unit 33, or control unit 43) inside the server 10, the management device 20, the base station 30, or the terminal device 40.

Furthermore, the above-described communication program may be stored in a disk device of a server on a network such as the Internet so that the communication program can be, for example, downloaded to the computer. Furthermore, the above-described functions may be implemented by cooperation of an operating system (OS) and application software. In the case, a part other than the OS may be stored in a medium to be distributed, or the part other than the OS may be stored in a server so that the part can be, for example, downloaded to the computer.

Furthermore, among pieces of processing described in the above-described embodiment, all or part of processing described as being performed automatically can be performed manually, or all or part of processing described as being performed manually can be performed automatically by a known method. In addition, the processing procedures, specific names, and information including various pieces of data and parameters in the above document and drawings can be optionally changed unless otherwise specified. For example, various pieces of information in each figure are not limited to the illustrated information.

Furthermore, each component of each illustrated device is functional and conceptual, and does not necessarily need to be physically configured as illustrated. That is, the specific form of distribution/integration of each device is not limited to the illustrated one, and all or part of the device can be configured in a functionally or physically distributed or integrated manner in any unit in accordance with various loads and use situations. Note that the configuration by the distribution or integration may be dynamically performed.

Furthermore, the above-described embodiment can be appropriately combined in a region where the processing contents do not contradict each other. Furthermore, the order of steps in the flowcharts or the sequence diagrams of the above-described embodiment can be appropriately changed.

Furthermore, for example, the embodiment can be carried out as any configuration constituting a device or a system, for example, a processor serving as a system large scale integration (LSI) or the like, a module using a plurality of processors or the like, a unit using a plurality of modules or the like, a set obtained by further adding other functions to the unit (i.e., configuration of part of device), and the like.

Note that, in the embodiment, a system means an assembly of a plurality of components (e.g., devices and modules (parts)), and it does not matter whether or not all the components are in the same housing. Therefore, a plurality of devices housed in separate housings and connected via a network and one device in which a plurality of modules is housed in one housing are both systems.

Furthermore, for example, the embodiment can adopt a configuration of cloud computing in which one function is shared and processed by a plurality of devices in cooperation via a network.

### <<5. Conclusion>>

As described above, according to the embodiment of the present disclosure, the terminal device 40 acquires information of a plurality of searchable cells across a plurality of operators. Then, the terminal device 40 selects an operator to be used for cellular communication based on a user requirement regarding the cellular communication, the acquired information on the plurality of cells, and capability information on the terminal device 40 regarding the cellular communication. Then, when communication quality decreases, the terminal device 40 changes the currently used operator to the selected operator. This enables the terminal device 40 to select an appropriate operator at the current location in accordance with the user requirement, so that stable communication can be achieved even in a communication environment without prior information.

Although the embodiment of the present disclosure has been described above, the technical scope of the present disclosure is not limited to the above-described embodiment as it is, and various changes can be made without departing from the gist of the present disclosure. Furthermore, components of different embodiments and variations may be appropriately combined.

Furthermore, the effects in the embodiment described in the present specification are merely examples and not limitations. Other effects may be exhibited.

Note that the present technology can also have the configurations as follows.
(1) A terminal device that is allowed to perform communication using a cellular network provided by an operator, the terminal device comprising:
   a first acquisition unit that acquires a requirement regarding the communication of a user who uses the terminal device;
   a second acquisition unit that acquires information on a plurality of cells which the terminal device is allowed to search for across a plurality of operators; and
   a selection unit that selects an operator to be used for the communication based on the requirement, the information on the plurality of cells, and capability information on the terminal device regarding the communication.
(2) The terminal device according to (1),
   wherein the second acquisition unit acquires information on all cells which the terminal device is allowed to search for across a plurality of operators, and
   the selection unit selects an operator to be used for the communication based on the requirement, the information on all cells, and capability information on the terminal device regarding the communication.
(3) The terminal device according to (1) or (2),
   wherein the selection unit selects an operator to be used for the communication based on the requirement, the information on the plurality of cells, and capability information on the terminal device regarding the communication using two or more component carriers.
(4) The terminal device according to any one of (1) to (3),
   wherein the selection unit selects an operator to be used for the communication by using a selection criterion different for each requirement.
(5) The terminal device according to (4),
   wherein the selection unit selects an operator to be used for the communication based on information on the communication for each combination of component carriers usable for the communication, which are identified based on the information on the plurality of cells and the capability information on the terminal device regarding the communication using two or more component carriers
(6) The terminal device according to (5),
   wherein the selection unit selects an operator to be used for the communication based on information on an expected communication speed for each combination of the component carriers.
(7) The terminal device according to (5),
   wherein the selection unit selects an operator to be used for the communication based on information on a number of component carriers for each combination of the component carriers.
(8) The terminal device according to any one of (1) to (7),
   wherein a plurality of requirements that are allowed to be selected by the user includes at least one condition selected from download preference, upload preference, stability preference, and power saving preference, and
   the first acquisition unit acquires a requirement selected by the user from the plurality of requirements as the requirement for selecting the operator.
(9) The terminal device according to (8),
   wherein the plurality of requirements that are allowed to be selected by the user includes the download preference, and
   when the requirement selected by the user is the download preference, the selection unit selects an operator based on at least one of information on a number of component carriers that are made usable by carrier aggregation (CA) and information on a theoretical value of a throughput calculated from a combination of CCs to be used and a bandwidth of each CC.
(10) The terminal device according to (8) or (9),
   wherein the plurality of requirements that are allowed to be selected by the user includes the upload preference,
   when the requirement selected by the user is the upload preference, the selection unit selects an operator expected to have an accelerated or maintained upload speed, and
   selection of the selection unit for selecting the operator expected to have an accelerated or maintained upload speed includes selection of an operator based on information on whether or not EUTRAN-NR Dual Connectivity (EN-DC) is usable.
(11) The terminal device according to any one of (8) to (10),
   wherein the plurality of requirements that are allowed to be selected by the user includes the stability preference, and
   when the requirement selected by the user is the stability preference, the selection unit selects an operator based on area information provided by each of the plurality of operators.
(12) The terminal device according to any one of (8) to (11),
   wherein the plurality of requirements that are allowed to be selected by the user includes the power saving preference, and
   when the requirement selected by the user is the power saving preference, the selection unit selects an operator with a fact that quality of currently used communication falls below a predetermined criterion as a trigger.
(13) The terminal device according to any one of (1) to (12),
   wherein the first acquisition unit acquires the requirement via a user interface of the terminal device or another terminal device connected wirelessly or by wire with the terminal device.
(14) The terminal device according to (13),
   wherein the first acquisition unit acquires the requirement with at least one of an explicit user operation using the user interface, connection between the terminal device and the other terminal device, and activation of a tethering function of the terminal device as a trigger.
(15)
   The terminal device according to (13) or (14), wherein the second acquisition unit acquires the information on the plurality of cells with at least one of an explicit user operation using the user interface, connection between the terminal device and the other terminal device, and activation of a tethering function of the terminal device as a trigger.
(16) The terminal device according to any one of (13) to (15),
   wherein the second acquisition unit acquires the information on the plurality of cells with a fact that quality of currently used communication falls below a predetermined criterion as a trigger.
(17) The terminal device according to any one of (13) to (16),
   wherein the second acquisition unit acquires the information on the plurality of cells with a fact that quality of communication associated with any subscriber identity module (SIM) inserted into or embedded in the terminal device satisfies a predetermined criterion as a trigger.
(18) The terminal device according to any one of (13) to (17), further comprising
   a display control unit that displays information on the communication on the user interface.
(19) The terminal device according to (18),
   wherein, when the user has not made a contract with the operator selected by the selection unit, the display control unit displays, on the user interface, information for the user to make a contract with the operator with which a contract has not been made.
(20) A communication method to be executed by a terminal device that is allowed to perform communication using a cellular network provided by an operator, the communication method comprising:
   acquiring a requirement regarding the communication of a user who uses the terminal device;
   acquiring information on a plurality of cells which the terminal device is allowed to search for across a plurality of operators; and
   selecting an operator to be used for the communication based on the requirement, the information on the plurality of cells, and capability information on the terminal device regarding the communication.

### Reference Signs List

1 COMMUNICATION SYSTEM
10 SERVER
20 MANAGEMENT DEVICE
30 BASE STATION
40 TERMINAL DEVICE
11, 21 COMMUNICATION UNIT
31, 41 WIRELESS COMMUNICATION UNIT
12, 22, 32, 42 STORAGE UNIT
13, 23, 33, 43 CONTROL UNIT
44 INPUT UNIT
45 OUTPUT UNIT
46 EXTERNAL INTERFACE
311, 411 TRANSMISSION PROCESSING UNIT
312, 412 RECEPTION PROCESSING UNIT
313, 413 ANTENNA
431 FIRST ACQUISITION UNIT
432 DETERMINATION UNIT
433 SECOND ACQUISITION UNIT
434 SELECTION UNIT
435 DISPLAY CONTROL UNIT
436 COMMUNICATION CONTROL UNIT

## Claims

1. A terminal device that is allowed to perform communication using a cellular network provided by an operator, the terminal device comprising:
a first acquisition unit that acquires a requirement regarding the communication of a user who uses the terminal device;
a second acquisition unit that acquires information on a plurality of cells which the terminal device is allowed to search for across a plurality of operators; and
a selection unit that selects an operator to be used for the communication based on the requirement, the information on the plurality of cells, and capability information on the terminal device regarding the communication.

2. The terminal device according to claim 1,
wherein the second acquisition unit acquires information on all cells which the terminal device is allowed to search for across a plurality of operators, and
the selection unit selects an operator to be used for the communication based on the requirement, the information on all cells, and capability information on the terminal device regarding the communication.

3. The terminal device according to claim 1,
wherein the selection unit selects an operator to be used for the communication based on the requirement, the information on the plurality of cells, and capability information on the terminal device regarding the communication using two or more component carriers.

4. The terminal device according to claim 1,
wherein the selection unit selects an operator to be used for the communication by using a selection criterion different for each requirement.

5. The terminal device according to claim 4,
wherein the selection unit selects an operator to be used for the communication based on information on the communication for each combination of component carriers usable for the communication, which are identified based on the information on the plurality of cells and the capability information on the terminal device regarding the communication using two or more component carriers

6. The terminal device according to claim 5,
wherein the selection unit selects an operator to be used for the communication based on information on an expected communication speed for each combination of the component carriers.

7. The terminal device according to claim 5,
wherein the selection unit selects an operator to be used for the communication based on information on a number of component carriers for each combination of the component carriers.

8. The terminal device according to claim 1,
wherein a plurality of requirements that are allowed to be selected by the user includes at least one condition selected from download preference, upload preference, stability preference, and power saving preference, and
the first acquisition unit acquires a requirement selected by the user from the plurality of requirements as the requirement for selecting the operator.

9. The terminal device according to claim 8,
wherein the plurality of requirements that are allowed to be selected by the user includes the download preference, and
when the requirement selected by the user is the download preference, the selection unit selects an operator based on at least one of information on a number of component carriers that are made usable by carrier aggregation (CA) and information on a theoretical value of a throughput calculated from a combination of CCs to be used and a bandwidth of each CC.

10. The terminal device according to claim 8,
wherein the plurality of requirements that are allowed to be selected by the user includes the upload preference,
when the requirement selected by the user is the upload preference, the selection unit selects an operator expected to have an accelerated or maintained upload speed, and
selection of the selection unit for selecting the operator expected to have an accelerated or maintained upload speed includes selection of an operator based on information on whether or not EUTRAN-NR Dual Connectivity (EN-DC) is usable.

11. The terminal device according to claim 8,
wherein the plurality of requirements that are allowed to be selected by the user includes the stability preference, and
when the requirement selected by the user is the stability preference, the selection unit selects an operator based on area information provided by each of the plurality of operators.

12. The terminal device according to claim 8,
wherein the plurality of requirements that are allowed to be selected by the user includes the power saving preference, and
when the requirement selected by the user is the power saving preference, the selection unit selects an operator with a fact that quality of currently used communication falls below a predetermined criterion as a trigger.

13. The terminal device according to claim 1,
wherein the first acquisition unit acquires the requirement via a user interface of the terminal device or another terminal device connected wirelessly or by wire with the terminal device.

14. The terminal device according to claim 13,
wherein the first acquisition unit acquires the requirement with at least one of an explicit user operation using the user interface, connection between the terminal device and the other terminal device, and activation of a tethering function of the terminal device as a trigger.

15. The terminal device according to claim 13,
wherein the second acquisition unit acquires the information on the plurality of cells with at least one of an explicit user operation using the user interface, connection between the terminal device and the other terminal device, and activation of a tethering function of the terminal device as a trigger.

16. The terminal device according to claim 13,
wherein the second acquisition unit acquires the information on the plurality of cells with a fact that quality of currently used communication falls below a predetermined criterion as a trigger.

17. The terminal device according to claim 13,
wherein the second acquisition unit acquires the information on the plurality of cells with a fact that quality of communication associated with any subscriber identity module (SIM) inserted into or embedded in the terminal device satisfies a predetermined criterion as a trigger.

18. The terminal device according to claim 13, further comprising
a display control unit that displays information on the communication on the user interface.

19. The terminal device according to claim 18,
wherein, when the user has not made a contract with the operator selected by the selection unit, the display control unit displays, on the user interface, information for the user to make a contract with the operator with which a contract has not been made.

20. A communication method to be executed by a terminal device that is allowed to perform communication using a cellular network provided by an operator, the communication method comprising:
acquiring a requirement regarding the communication of a user who uses the terminal device;
acquiring information on a plurality of cells which the terminal device is allowed to search for across a plurality of operators; and
selecting an operator to be used for the communication based on the requirement, the information on the plurality of cells, and capability information on the terminal device regarding the communication.
